# EUROPEAN PATENT APPLICATION

(11) **EP 4 811 293 A1**
(43) Date of publication of application: **23.09.2026**
(21) Application number: 25164761.6
(22) Date of filing: 19.03.2025
(51) Int. Cl.: G06T 17/20, G06T 19/00

(54) **METHOD FOR FLATTENING A DIGITAL 3D MESH REPRESENTING A DENTAL OBJECT**

(71) Applicant: 3Shape A/S, 1060 Copenhagen K (DK)
(72) Inventor: HANSEN, Peter Steen, 1060 Copenhagen K (DK); ASK, Erik, 1060 Copenhagen K (DK); ÍSLEIFSSON, Bárður, 1060 Copenhagen K (DK)
(74) Representative: Zacco Denmark A/S

(57) **Abstract**

The present disclosure is to a computer-implemented method for flattening a digital 3D mesh representing a dental object. The method comprises obtaining the digital 3D mesh. The method comprises determining a circumferential mesh boundary in the digital 3D mesh, wherein the mesh boundary comprises multiple boundary vertices surrounding multiple inner vertices. The method comprises determining a target shape with a circumferential target boundary, wherein the target shape is planar. The method comprises for each vertex of the boundary vertices, performing coherent mapping to an anchor point on the target boundary corresponding to the respective vertex. The method comprises for each vertex of the boundary vertices, translating the respective boundary vertex to its corresponding anchor point on the target boundary. The method comprises flattening the inner vertices to the target shape to generate a flattened mesh based on the anchor points.

## Description

### Technical field

The disclosure relates to a method for flattening a digital 3D mesh representing a dental object. The disclosure further relates to a dental scanning system.

### Background

Digital dentistry has revolutionized the field of dental care by integrating advanced digital technologies into traditional dental procedures. This innovation encompasses a wide range of tools and systems, including intraoral scanners, computer-aided design and manufacturing (CAD/CAM) systems, 3D printing, and digital imaging technologies. These advancements have introduced significant advantages over conventional methods, improving the accuracy, efficiency, and overall quality of dental treatments.

A notable benefit is the improvement in patient experience. Digital workflows minimize the discomfort associated with traditional methods, such as using alginate materials for impressions of dental objects. Instead, intraoral scanners capture a digital three-dimensional (3D) representation of the dental object quickly and non-invasively. This enhances patient satisfaction and reduces anxiety during dental visits.

The digital 3D mesh often comes in the form of a 3D mesh made of multiple facets, such as triangles, which represent the surface of the dental object. Using the digital 3D mesh, treatment time can be reduced significantly. For example, CAD/CAM technology enables the in-office design and fabrication of restorations such as crowns, veneers, and bridges in a single visit, eliminating the need for temporary restorations and multiple appointments. Similarly, 3D printing technology accelerates the production of dental models, surgical guides, and prosthetics, streamlining clinical workflows. From a clinical perspective, the integration of digital technologies enhances treatment outcomes. The precise data obtained through digital tools enables highly customized and predictable treatment plans tailored to the unique anatomy of each patient. This is particularly beneficial in complex procedures such as implant placement and orthodontic treatments, where accuracy is paramount.

In restorative dentistry, a dental restoration, e.g. s crown, is attached to an existing tooth by reshaping the tooth to have an outer contour that matches the inner contour of the dental restoration, whereby the dental restoration may be glued onto the reshaped tooth. The reshaped tooth is also referred to as a restoration/preparation site and includes the margin line, which is a term referring to the precise boundary or edge where the prepared tooth structure meets the restorative material, such as a crown, veneer, or filling. This is a critical interface that affects both the function and aesthetics of the restoration. Correct determination of the margin line in the digital data is therefore crucial to designing a proper dental restoration from that data, as an error in the determined margin line may lead to a mismatch in the interface between the physical margin line. Proper determination of a margin line from 3D data may however be difficult as the margin line may be occluded by the remainder of the preparation tooth from certain viewpoints.

Hence, for all its benefits, working with 3D data can sometimes pose challenges as the complexity of processing 3D information can be difficult for both computers and human users. Such challenges can be mitigated through mesh flattening which allows for a 3D mesh to be flattened into a two-dimensional (2D) shape. Mesh flattening is disclosed in the applicant's own US11321918B2 which discloses a method for manipulating 3D objects by flattening a 3D mesh, more particularly a 3D mesh representing a crown. While this method works well with dental object such as crowns which have continuous circumferential boundaries that does not curve back on itself, i.e. as one moves from one boundary vertex to the next the radial angle only increases until a full round around the boundary has been completed, it is not always suitable for preparation sites, e.g. margin lines, as it assumes the boundary orientation to be monotonous to maintain the order-preserving property, which is not guaranteed for the boundary of preparation sites.

Hence there is a need for an improved method for manipulating, e.g. flattening, 3D meshes representing dental objects.

### Summary

A first aspect of the present disclosure is to a computer-implemented method for flattening a digital 3D mesh representing a dental object. The method comprises obtaining the digital 3D mesh. The method comprises determining a circumferential mesh boundary in the digital 3D mesh, wherein the mesh boundary comprises multiple boundary vertices surrounding multiple inner vertices. The method comprises determining a target shape with a circumferential target boundary, wherein the target shape is planar. The method comprises for each vertex of the boundary vertices, performing coherent mapping to an anchor point on the target boundary corresponding to the respective vertex. The method comprises for each vertex of the boundary vertices, translating the respective boundary vertex to its corresponding anchor point on the target boundary. The method comprises flattening the inner vertices to the target shape to generate a flattened mesh based on the anchor points.

A further aspect of the present disclosure is to a computer program product comprising instructions which, when the program is executed by a computer, causes the computer to carry out the method of any of the first aspect.

A further aspect of the present disclosure is to a non-transitory computer readable medium comprising instructions which, when executed by a computer, causes the computer to carry out the method of any of the first aspect.

A further aspect of the present disclosure is to a dental system comprising a processing device configured for executing the method of the first aspect.

Given an open and connected polygon mesh, the algorithm aims to map its ordered set of boundary vertices to a regular shape. All the boundary vertices are required to belong to the same boundary in the case of multiple boundaries. Here ordered means in an order corresponding to navigating from vertex to vertex along boundary edges in a common orientation around the boundary of the mesh.

Once the boundaries are fixed, the remaining vertices and edges are mapped to the planar object, flattening the initial three-dimensional mesh to a planar mesh. Various embodiments may use different methods for this mapping. Initially, a matrix of each vertex's connectivity to other vertices may be created, and solving the system of the matrix maps the coordinates of each vertex to the plane (Tutte, William Thomas. "How to draw a graph." Proceedings of the London Mathematical Society 3.1 (1963): 743-767). This connectivity may be weighted in different ways, resulting in different mappings. In various embodiments, these methods include but are not limited to: uniform weights (Tutte 1963), weights based on angles (Floater, Michael S., and Ming-Jun Lai. "Polygonal spline spaces and the numerical solution of the Poisson equation." SIAM Journal on Numerical Analysis 54.2 (2016): 797-824), weights based on cotangents (Meyer, Mark, et al. "Discrete differential-geometry operators for triangulated 2-manifolds." Visualization and mathematics III. Springer, Berlin, Heidelberg, 2003. 35-57).

For examples of flattening initial three-dimensional scans to planar meshes, see below.

An advantage of flattening the initial three-dimensional meshes in this manner is that the initial three-dimensional mesh and the planar mesh are bijective, meaning that each vertex can be mapped back and forth between the two meshes, i.e. the 3D mesh and the flattened mesh.

### Brief description of the drawings

The above and other features and advantages of the present invention will become readily apparent to those skilled in the art by the following detailed description of exemplary embodiments thereof with reference to the attached drawings, in which:
FIG. 1a shows an intraoral scanner used in the scanning system or method of the invention;
FIG. 1b shows an intraoral scanner used in the scanning system or method of the invention;
FIG. 2 shows a lab scanner used in the scanning system or method of the invention;
FIG. 3 shows box diagram of a scanning system of the invention;
FIG. 4 shows box diagram of a scanning system of the invention;
FIG. 5 shows point cloud data;
FIG. 6 shows a 3D representation comprising a 3D mesh;
FIG. 7a shows an example of a mesh;
FIG. 7b shows an example of a mesh;
FIG. 7c shows an example of a mesh;
FIG. 7d shows an example of a mesh;
FIG. 7e shows an example of a mesh;
FIG. 8a shows a 3D mesh;
FIG. 8b shows an enlarged part of a 3D mesh;
FIG. 8c shows an enlarged part of a 3D mesh;
FIG. 9 shows a 3D mesh;
FIG. 10 shows an initial 3D mesh;
FIG. 11a illustrates mapping ruled of the prior art;
FIG. 11b illustrates mapping ruled of the prior art leading to invalid mapping;
FIG. 12 shows a 3D mesh representing a dental object with a margin line;
FIG. 13 shows a flowchart of a method of the invention;
FIG. 14 shows a flowchart of a method of the invention;
FIG. 15a shows a 3D mesh with an identified area of interest;
FIG. 15b shows a subsection of the 3D mesh with the identified area of interest surrounded by a circumferential mesh boundary;
FIG. 15c shows the subsection flattened to a flattened mesh of the area of interest;
FIG. 16a shows a subsection of an identified area of interest;
FIG. 16b shows the subsection flattened to a flattened mesh of the area of interest;
FIG. 16c shows an identified margin line in the flattened mesh;
FIG. 17 shows a graphical user interface and underlying image processing; and
FIG. 18 shows a graphical user interface and underlying image processing.

### Detailed description

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the devices, systems, mediums, programs and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

Disclosed is a computer-implemented method for manipulating at least a part of a digital 3D mesh representing a dental object, the method comprising:
- obtaining the digital 3D mesh;
- determining a circumferential mesh boundary in the digital 3D mesh, wherein the mesh boundary comprises multiple boundary vertices and one or more inner vertices surrounded by the boundary vertices;
- determining a target shape with a circumferential target boundary, wherein the target boundary is planar; and
- for each vertex of the boundary vertices, performing coherent mapping to an anchor point corresponding to the respective vertex on the target boundary.

By performing coherent mapping, the drawbacks of the prior art are mitigated, namely that the result was rarely flat, as the anchor points did not lie on a common plane, and that the flattened shape could take arbitrary boundary shapes, as the boundary shape was maintained during flattening.

Choosing a planar target shape ensures that the result (flattened mesh) is flat, also when we use a mapping that is not coherent.

The coherent mapping serves to ensure that the result is not of less information, e.g. it does not create self-intersection that is not present in the un-flattened mesh. In the disk example, if two neighboring boundary points are mapped (incoherently) to opposite ends of the unit circle, this would create a facet in the flattened mesh reaching across the center of the circle, potentially occluding some inner facets - effectively lessening the information.

In the prior art the result was rarely flat due to the previous approach to flattening the 3D mesh, e.g. a preparation site, where anchor points where set by fixing boundary vertices in place, hence adopting whatever curvature the preparation site boundary has, which is rarely flat.

The method may be for flattening a 3D mesh into a flattened 2D mesh. The method may be for identifying a margin line of the dental object in the 3D mesh. The use of coherent mapping may have numerous applications. First and foremost, it finds application when flattening the 3D mesh as it ensures correct mapping of the boundary vertices to the anchor points, which in turn prevent self-intersections and accidental folding of the 3D mesh in the flattening step following the coherent mapping. Flattening may in turn be a useful tool for identifying which vertices of the 3D mesh represents a margin line of the dental object.

Margin lines may be difficult to identify in 3D, both for humans and for computer algorithms, because the margin line is at least partly occluded, i.e. hidden from view, from most viewpoints. This in turn also makes it difficult to provide training material for training a machine learning model to recognize margin lines on a vertex level in 3D. Instead of using the 3D mesh to identify the margin line, the invention leverages the trick of flattening the 3D mesh to a flattened mesh, i.e. a 2D mesh, whereby the entirety of the margin line becomes visible, i.e. non-occluded. This works due to the coherent mapping as the 3D mesh must be flattened correctly to ensure a usable flattened mesh. After identifying the margin line in the flattened mesh, the flattening may be reverted to bring the flattened mesh back into 3D or the vertices of the 3D mesh representing the margin line may be identified based on their corresponding vertices of the flattened mesh identified as representing the margin line.

In an embodiment of the invention, the coherent mapping fulfills a criterion of order-preservation so that the anchor points have the same order around the target boundary as their corresponding boundary vertices have around the mesh boundary and/or wherein the coherent mapping fulfills a criterion of uniqueness so that each unique boundary vertex mapped to a unique anchor point.

In an embodiment of the invention, the coherent mapping comprises selecting an initial vertex of the boundary vertices and an initial anchor point on the target boundary, and mapping the initial vertex to the initial anchor point. Selection of the initial vertex and the initial anchor point may be done arbitrarily, the important step is that the subsequent boundary vertices are mapped coherently to corresponding anchor points on the target boundary, i.e. the order of the anchor points around the on the target boundary is the same as the boundary vertices around the circumferential mesh boundary.

In an embodiment of the invention, the coherent mapping comprises for each vertex of the boundary vertices other than the initial vertex, determining a relative distance along the mesh boundary between the respective vertex and the initial vertex, and for each vertex of the boundary vertices other than the initial vertex, mapping the respective vertex to an anchor point that is the same relative distance along the target boundary from the initial anchor point as the relative distance between the respective vertex and the initial vertex.

In an embodiment of the invention, the method further comprises for each vertex of the boundary vertices, translating the respective boundary vertex to its corresponding anchor point on the target boundary. Once the anchor points are known from the coherent mapping, the boundary vertices may be moved/translated to the target boundary of the target shape.

In an embodiment of the invention, the target shape is planar. In an embodiment, the target shape is a circle. For applications relating to flattening, the target shape will always be planar. However, other application may also take advantage of the disclosed coherent mapping, and for such applications the target shape may have other shapes, e.g. cone shaped.

In an embodiment of the invention, the method further comprises flattening the inner vertices to the target shape based on the anchor points to generate a flattened mesh. Having coherently mapped the boundary vertices to the target shape, the flattening methods known are more likely to achieve a correct flattening.

In an embodiment of the invention, determining a circumferential mesh boundary in the digital 3D mesh comprises coarsely identifying a margin line of the dental object in the digital 3D mesh, and setting the circumferential mesh boundary around the coarsely identified margin line. For flattening the 3D mesh, the part of the 3D mesh that comprises the margin line, i.e. the part that represents the margin line of the dental object, isolated. To do this, a coarse identification of the margin line in the 3D mesh may be performed, i.e. not an identification on a vertex level but rather isolating a section of the 3D mesh that can credibly be determined to comprise the entire margin line. This may be done using a machine learning model, also referred to as the first trained model, trained to recognize a margin line in 3D. Coarsely identifying the margin line may alternatively be done by identifying a part of the 3D mesh 600 representing a preparation site 632. As the margin line 630 is part of the preparation site 632 it is ensured that it will form part of the area of interest 642, and that if will fall entirely inside the circumferential mesh boundary 640 set around the preparation site 632. Hence the first model may be trained to identify a preparation site 632 in a 3D mesh 600, whereby it may coarsely identify the margin line 630, i.e. identify an area of interest 642 having the entire margin line 630 in it.

In an embodiment of the invention, the circumferential mesh boundary 640 is set with a buffer distance to the coarsely identified margin line, e.g. by adding a buffer zone around the preparation site 632 identified by the first model. To ensure that the entire margin line 630 is comprised by the determined circumferential mesh boundary 640, a buffer distance may be added to the coarsely identified margin line, whereby possible mistakes made, e.g. by the first trained model, in recognizing the margin line 630 does not lead to parts of the margin line 630 falling outside the circumferential mesh boundary 640 and thus being omitted from the flattened mesh 652.

It is noted that the subsection of the 3D mesh defined by the circumferential mesh boundary 640, may be extracted from the 3D mesh for the following steps. Each subsequent method step may however be retraced so that a vertex or surface point latter identified in the processed mesh, e.g. the flattened mesh 652, as representing an area of interest, e.g. the margin line 630, may be used for identifying its corresponding vertex or surface point in the 3D mesh, whereby the vertices of the 3D mesh representing the area of interest, e.g. the margin line 630, may be identified/determined.

In an embodiment of the invention, the method further comprises identifying the margin line 630 in the flattened mesh. In an embodiment of the invention, identifying the margin line in the flattened mesh comprises determining vertices of the flattened mesh that represents the margin line. Having flattened the subsection of the 3D mesh comprising the margin line, i.e. the subsection delimited by the circumferential mesh boundary, an identification of the margin line on a vertex level may be done as the flattening ensures that the margin is not occluded. Identifying the margin line in the flattened mesh may be performed by a second trained model trained to identify a margin line in 2D. The success of identifying the margin line the flattened mesh relies on the credibility of the mesh flattening. The method of the invention therefore decreases the failure rate of margin line identification by ensuring a correctly flattened mesh through coherent mapping.

In an embodiment of the invention, the method further comprises identifying vertices of the digital 3D mesh corresponding to the vertices of the flattened mesh determined to represent the margin line. In an embodiment of the invention, the method further comprises determining the margin line in the digital 3D mesh based on the identified vertices of the digital 3D mesh corresponding to the vertices of the flattened mesh determined.

In an embodiment the step of obtaining the digital 3D mesh comprises:
∘ obtaining one or more 2D image(s), e.g. using an intraoral scanner or a lab scanner, of the dental object;
o generating, based on the one or more 2D image(s), point cloud data, wherein the point cloud data comprises multiple points representing surface points of the dental object; and
∘ generating, based on the point cloud data, the digital 3D mesh comprising multiple polygons representing the surface of the dental object.

In an embodiment, the generating the digital 3D mesh comprises obtaining geometric information based on the one or more 2D image(s), wherein the geometric information is indicative of a rate of change of one or more surface characteristic(s) in multiple surface sections of the dental object.

In an embodiment, generating the digital 3D mesh comprises determining a mesh resolution for each surface section based on the geometric information. In an embodiment, generating the digital 3D mesh comprises generating a mesh for each surface section with resolution determined for the respective surface section.

By dividing the 3D representation into subsections representing respective surface sections of the dental object, the mesh may be generated at a mesh resolution determined to be suitable for representing the respective surface sections of the dental object. The mesh may thus accurately represent the surface of the object without requiring excessive processing power of the scanning system. The mesh may thus be generated quicker, saving time for the user and patient and increasing the user experience.

In an embodiment, at least part of the geometric information relating to a respective surface section is based on a distribution of the points of the point cloud data corresponding to that surface section. In an embodiment, at least part of the geometric information relating to a respective surface section is based on performing raytracing on light reflected at the points of the point cloud data corresponding to that surface section. In an embodiment, the geometric information comprises information indicative of a rate of change of a contour in the surface sections. In an embodiment, wherein at least part of the geometric information relating to a respective surface section is based on color data corresponding to that surface section. In an embodiment, the geometric information comprises information indicative of a rate of change of color in the surface sections.

Basing the geometric information on color data from the 2D images will allow for the provision of geometric data which is indicative of the color variation of the surface of the object. This may in turn be used to determine the mesh resolution needed to accurately represent the color variation in the various surface sections of the object.

Using geometric information comprising color and/or contour data is particularly useful when generating a 3D mesh representing a preparation site with a margin line because the margin line is defined by sharp edges, i.e. a high rate of change in contour, and often also a high degree of color change as part of the margin line comprises a part of the original surface of the tooth, which has been subjected to the environment of the patients mouth and therefore undergone color changes, and a part of newly exposed tooth material, due to the preparation process of milling of part of the tooth. Generating the 3D mesh using the geometric information therefore means that a higher mesh resolution may be selected for the surface sections representing the margin line, ensuring that the margin line is resolved more accurately.

In an embodiment, obtaining one or more 2D images of the object comprises obtaining multiple 2D images of the object. In an embodiment, generating point cloud data comprises solving a correspondence problem to ascertain which parts of a first image of the multiple 2D images correspond to which parts of second image of the multiple 2D images. In an embodiment, generating point cloud data comprises registering points of the multiple points obtained from each respective 2D image into a common coordinate system.

In an embodiment, generating the digital 3D mesh comprises assigning a color value to each polygon based on the one or more 2D image(s). This has the advantage that the 3D representation may represent not only the shape of the object but also the color. This may allow for a more detailed diagnostic when the user inspects the 3D representation and also allow for prosthetics made based on the 3D representation to be color matched to adjacent teeth.

In an embodiment, obtaining one or more 2D image(s) comprises projecting light onto the dental object. In an embodiment, the light is projected in a pattern. In an embodiment, the projected pattern is time static. In an embodiment, the projected pattern is time variable. By projecting light in a pattern, it may be easier to solve the correspondence problem when multiple 2D images taken at different times and/or viewpoints are used, i.e. the pattern features may be used to identify which parts of one 2D image correspond to parts of another 2D image.

In an embodiment, obtaining one or more 2D image(s) of the dental object is performed with an intraoral scanner. Intraoral scanners are advantageous as they allow the user, e.g. dentist or dental technician, to create a digital 3D representation of the user's tooth/teeth quickly and accurately without the need for taking a physical dental impression which is uncomfortable for the patient.

In an embodiment, obtaining one or more 2D image(s) of the dental object is performed with a lab scanner. Using a lab scanner to acquire 2D images of an imprint of a patient's dentition may thus be a cost-efficient way of generating a digital 3D representation for users without access to intraoral scanners.

In an embodiment, generating point cloud data comprises performing a first transformation to generate a dataset of coordinates of at least part of the object in a scanning-device-coordinate-system. In an embodiment, generating point cloud data comprises performing a second transformation on the dataset of coordinates of at least part of the object in a scanning-device-coordinate-system to generate at least part of point cloud data in a real-world-coordinate-system.

In an embodiment, generating the digital 3D mesh further comprises generating an initial mesh based on the point cloud data, wherein the initial mesh comprises multiple initial polygons. In an embodiment, generating the digital 3D mesh is based on the initial mesh.

In an embodiment, obtaining geometric information for a surface section comprises comparing normal vectors of adjacent initial polygons within a surface section to obtain information on a rate of change in contour of the surface section.

In an embodiment, the method further comprises generating 3D dental restoration data representing a dental restoration configured for placement on the tooth having the margin line based on the digital 3D mesh and one or both of the vertices of the flattened mesh determined to represent the margin line or the vertices of the digital 3D mesh identified as corresponding to the margin line. Having identified the margin line in the dental object using the mesh flattening method disclosed herein, the 3D mesh and the 3D dental restoration data may be used for designing, and subsequently manufacturing, a dental restoration which is less likely to suffer from interface defects caused by an inaccurate fit with the margin line. The method may thus improve the success rate of the dental restoration treatment and make it less likely that the patient will have to come in for follow-up treatments or remakes. Finaly, an improved margin line/restoration interface may improve the lifespan of the restoration, meaning that the restoration may last longer.

The embodiments and advantages described above may also be applicable to the dental scanning system of the invention.

### Dental object

While the dental object is referred to in singular, the dental object may be a group of dental features of a subject's, i.e. patient's, mouth, such as a group of teeth and their encircling gingiva. Examples of dental objects include any one or more of: tooth/teeth, gingiva, implant(s), dental restoration(s), dental prostheses, edentulous ridge(s), and/or combinations thereof. Alternatively, the dental object may be a gypsum model or a plastic model representing a subject's teeth. As an example, the dental object may comprise teeth and/or gingiva of a subject. The dental object may only be a part of the subject's teeth and/or oral cavity, since the entire set of teeth of the subject is not necessarily scanned during a scanning session. A scanning session may be understood herein as a period of time during which data (such as 2D images) of the dental object is acquired/obtained.

### Scanning device

The scanning device disclosed herein may be an intraoral scanning device for acquiring images within an intraoral cavity of a subject. The intraoral scanning device is a handheld scanning device, i.e. a device configured to be held with a human hand. Alternatively, the scanning device may be a stationary dental scanner, also referred to as a lab scanner, for acquiring images of a gypsum model or a plastic model representing a subject's teeth. The scanning device may employ any suitable scanning principle such as triangulation-based scanning, stereo vision, structure from motion, confocal scanning, or other scanning principles.

In some embodiments, the scanning device employs a triangulation-based scanning principle. As an example, a projector unit and one or more camera units may be utilized to determine points in 3D space based on triangulation. In other embodiments, the scanning device employs a focus-based scanning principle.

### Projector unit

A projector unit may be understood herein as a device configured for projecting light onto a surface, such as the surface of a dental object. In preferred embodiments, the projector unit is configured to project a pattern of light onto the surface of a dental object. The projector unit may be configured to project a pattern of light such that the pattern of light is in focus at a predefined focus distance measured along a projector optical axis.

Each projector unit may comprise one or more light sources. The projector unit may be configured to project a pattern of light defined by a plurality of projector rays when the light source(s) are on/active. The light source(s) may be configured to generate light of a single wavelength, a distribution, e.g. a Poisson distribution, of wavelengths, or a combination of wavelengths (mono- or polychromatic). The combination of wavelengths may be produced by a light source configured to produce light comprising different wavelengths (such as white light).

In some embodiments, each projector unit comprises a light source for generating white light. Alternatively, the projector unit may comprise multiple light sources such as LEDs individually producing light of different wavelengths (such as red, green, and blue) that may be combined to form light comprising different wavelengths. Thus, the light produced by the light source(s) may be defined by a wavelength defining a specific color, or a range of different wavelengths defining a combination of colors such as white light. In some embodiments, the light source is a diode, such as a white light diode, or a laser diode.

In some embodiments, the scanning device comprises a light source configured for exciting fluorescent material to obtain fluorescence data from the dental object such as from teeth. Such a light source may be configured to produce a narrow range of wavelengths. In other embodiments, the scanning device comprises an infrared light source, which is configured to generate wavelengths in the infrared range, such as between 700 nm and 1.5 µm. In some embodiments, the scanning device comprises one or more light sources selected from the group of: Infrared (IR) light source, near-infrared (NIR) light source, blue light source, violet light source, ultraviolet (UV) light source, and/or combinations thereof. In some embodiments, the scanning device comprises a first light source forming part of the projector unit, and one or more second light sources, e.g. IR-LED(s) and/or UV-LED(s), located in a distal part of the scanning device, such as in the tip of the scanning device.

The projector unit may comprise Digital Light Processing (DLP) projectors using a micro mirror array for generating a time varying pattern, or a diffractive optical element (DOF), or front-lit reflective mask projectors, or micro-LED projectors, or Liquid crystal on silicon (LCoS) projectors or back-lit mask projectors, wherein a light source is placed behind a mask having a spatial pattern, whereby the light projected on the surface of the dental object is patterned. The pattern may be dynamic, i.e. such that the pattern changes over time, or the pattern may be static in time, i.e. such that the pattern remains the same over time. The projector unit may comprise one or more collimation lenses for collimating the light from the light source. The collimation lens(es) may be placed between the light source and the mask. The projector unit may further comprise one or more focus lenses, or lens elements, configured for focusing the light at a predefined focus distance.

In some embodiments, the projector unit of the scanning device comprises at least one light source and a pattern generating element for defining a pattern of light. The pattern generating element is preferably configured for generating a light pattern to be projected on a surface of a dental object. As an example, the pattern generating element may be a mask having a spatial pattern. Hence, the projector unit may comprise a mask configured to define a pattern of light. The mask may be placed between the light source of the projector unit and the one or more focus lenses, such that light transmitted through the mask is patterned into a light pattern. As an example, the mask may define a polygonal pattern comprising a plurality of polygons, such as a checkerboard pattern. The projector unit may further comprise one or more lenses such as collimation lenses or projection lenses. In other embodiments, the pattern generating element is based on diffraction and/or refraction to generate the light pattern, such as a pattern comprising an array of discrete unconnected dots.

The pattern generating element may be a mask, such as a transparency or transmission mask, having a spatial pattern. In other embodiments, the pattern generating element is configured to utilize diffraction and/or refraction to generate a light pattern.

The spatial pattern may be a polygonal pattern comprising a plurality of polygons. The polygons may be selected from the group of: triangles, rectangles, squares, pentagons, hexagons, and/or combinations thereof. Other polygons can also be envisioned. In general, the polygons are composed of edges and corners. In some embodiments, the polygons are repeated in the pattern in a predefined manner. As an example, the pattern may comprise a plurality of repeating units, wherein each repeating unit comprises a predefined number of polygons, wherein the repeating units are repeated throughout the pattern. Alternatively, the pattern may comprise a predefined arrangement comprising any of stripes, squares, dots, triangles, rectangles, and/or combinations thereof. In some embodiments, the pattern is non-coded, such that no part of the pattern is unique.

In some embodiments, the generated pattern of light is a polygonal pattern, such as a checkerboard pattern comprising a plurality of checkers. Similar to a common checkerboard, the checkers in the pattern may have alternating dark and bright areas corresponding to areas of low light intensity (dark) and areas of high(er) light intensity (bright). In some embodiments the pattern of light is a checkerboard pattern comprising alternating squares of dark and bright. In some embodiments, the light pattern comprises a distribution of discrete unconnected spots of light.

The pattern preferably comprises a plurality of pattern features. The pattern may be a high-density pattern, which may be understood as a pattern comprising more than 3000 pattern features. However, the presently disclosed system and method is not limited to high-density patterns, since it works equally well for patterns of lower density. In some embodiments, the pattern comprises at least 1000 pattern features, or at least 3000 pattern features, or at least 10000 pattern features. When projecting a pattern comprising pattern features onto a surface of the 3D object, the acquired images of the object will similarly comprise a plurality of image features corresponding to the pattern features. A pattern/image feature may be understood as an individual well-defined location in the pattern/image. Examples of image/pattern features include corners, edges, vertices, points, transitions, dots, stripes, etc. In some embodiments, the image/pattern features comprise the corners of checkers in a checkerboard pattern. In other embodiments, the image/pattern features comprise corners in a polygon pattern such as a triangular pattern.

The projector unit may be configured to generate a predefined static pattern, which may be projected onto a surface of an object. An advantage of using a static pattern is that it enables the ability to capture all image data simultaneously, thus preventing warping due to movement. Another advantage is that a static pattern makes it possible to acquire only one image per camera unit in the set of images, thereby reducing power consumption e.g. of the light source.

Alternatively, the projector unit may be configured to generate a dynamic pattern, which changes in time. The projector unit may be associated with its own projector plane, which is determined by the projector optics. As an example, if the projector unit is a back-lit mask projector, the projector plane may be understood as the plane wherein the mask is contained. The projector plane comprises a plurality of pattern features of the projected pattern. Preferably, the camera units and projector unit are arranged such that the image sensors and the projector plane, e.g. defined by the mask, are in the same plane.

The projector unit may define a projector optical axis. An optical axis may be understood as a line along which there is some degree of rotational symmetry in an optical system such as a camera lens or a projector unit. In some embodiments, the projector optical axis of the projector unit is substantially parallel with the longitudinal axis of the scanning device. In other embodiments, the projector optical axis of the scan unit defines an angle, such as at least 45° or at least 75°, with the longitudinal axis of the scanning device. In other embodiments, the projector optical axis of the projector unit is substantially orthogonal to the longitudinal axis of the scanning device.

### Camera unit

A camera unit may be understood herein as a device for capturing a 2D image of the dental object. Each camera unit may comprise an image sensor for generating an image based on incoming light e.g. received from the illuminated dental object. As an example, the image sensor may be an electronic image sensor such as a charge-coupled device (CCD) or an active-pixel sensor (CMOS sensor). In some embodiments, the image sensor is a global shutter sensor configured to expose the entire image area (all pixels) simultaneously and generate an image in a single point in time. The image sensor may have an image frame rate of at least 30 frames per second, such as at least 60 frames per second, or even at least 90 frames per second.

The image sensor(s) may comprise an array of pixels, wherein each pixel is associated with a corresponding camera ray. Similarly, each image, within the set of images, may be composed of an array of pixels, wherein each pixel comprises a pixel color defined by one or more color channels. The array of pixels may be a two-dimensional (2D) array. In some embodiments, the image sensor is a CMOS sensor comprising an analog-to-digital converter (ADC) for each column of pixels, making conversion time significantly faster and allowing each camera unit to benefit from greater speed.

Each image sensor may define an image plane, which may be understood as the plane that contains the object's projected image. Each image obtained by the image sensor(s) may comprise a plurality of image features, wherein each image feature originates from a pattern feature of the projected pattern. In some embodiments, one or more of the camera units comprise a light field camera. Preferably, each camera unit defines a camera optical axis. The camera units may further comprise one or more focus lenses for focusing light.

In some embodiments, the image sensor is a monochrome image sensor, wherein each pixel is associated with a single color channel, e.g. is a grayscale color channel, wherein the value of each pixel represents only an amount of light. In other embodiments, the image sensor is a color image sensor or an image sensor comprising a color filter array on the array of pixels. As an example, the color filter array may be a Bayer filter employing an arrangement of four color filters: Red (R), Green (G), Green (G), and Blue (B). The Bayer filter may also be referred to as an RGGB filter. When utilizing the image sensor data, color pixels may be combined to monochrome pixels of 2 x 2 color pixels for 3D depth reconstruction. In this case, the resolution of the 3D depth reconstruction is only half the resolution of the image sensor in each direction. When obtaining texture (color) images the full native resolution is preferably utilized (with color filtered pixels).

In accordance with some embodiments, the projector optical axis and the camera optical axis of at least one camera unit define a camera-projector angle of approximately 5 to 15 degrees, preferably 5 to 10 degrees, even more preferably 8 to 10 degrees. In some embodiments, the camera units are defocused at the opening of the probe of the scanning device and/or at the surface of an optical window in said probe. In some embodiments of the scanning device, the camera units and projector unit of a given scan unit are focused at the same distance. In some embodiments, each camera unit has a field of view of 50-115 degrees, such as 65-100 degrees, or 80-90 degrees.

### Processing device

In accordance with some embodiments, the scanning system comprises a processing device having one or more processors selected from the group of: central processing units (CPU), accelerators (offload engines), general-purpose microprocessors, graphics processing units (GPU), neural processing units (NPU), application-specific integrated circuits (ASIC), field-programmable gate arrays (FPGA), dedicated logic circuitry, dedicated artificial intelligence processor units, or combinations thereof. The processor(s) may be located on the scanning device. Alternatively, the processor(s), or a sub-set of the processor(s), may be located on a computer system and/or on a remote computing device as described herein.

The scanning system may further comprise computer memory for storing instructions, which when executed, causes the processor(s) to carry out the step of determining image features in the set of images. The computer memory may further store instructions, which when executed, causes the processor(s) to carry out the step of generating a digital representation of a three-dimensional (3D) object. In general, the processor(s) may be configured to perform any of the disclosed computer-implemented methods herein, either fully or in part, e.g. such that some processor(s) perform some method steps and other processors perform other method steps, when executed.

### Computer system

A computer system may be understood as an electronic processing device for carrying out sequences of arithmetic or logical operations. In the present context, a computer system refers to one or more devices comprising at least one processor, such as a central processing unit (CPU), along with some type of computer memory. Examples of computer systems falling within this definition include desktop computers, laptop computers, computer clusters, servers, cloud computers, quantum computers, mobile devices such as smartphones and tablet computers, and/or combinations thereof.

The computer system may comprise hardware such as one or more central processing units (CPU), graphics processing units (GPU), and computer memory such as random-access memory (RAM) or read-only memory (ROM). The computer system may comprise a CPU, which is configured to read and execute instructions stored in the computer memory e.g. in the form of random-access memory. The computer memory is configured to store instructions for execution by the CPU and data used by those instructions. As an example, the memory may store instructions, which when executed by the CPU, cause the computer system to perform, wholly or partly, any of the computer-implemented methods disclosed herein. The computer system may further comprise a graphics processing unit (GPU). The GPU may be configured to perform a variety of tasks such as video decoding and encoding, rendering of the digital representation, and other image processing tasks.

The computer system may further comprise non-volatile storage in the form of a hard disc drive. The computer system preferably further comprises an I/O interface configured to connect peripheral devices used in connection with the computer system. More particularly, a display may be connected and configured to display output from the computer system. The display may for example display a 2D rendering of the generated digital 3D mesh. Input devices may also be connected to the I/O interface. Examples of such input devices include a keyboard and a mouse, which allow user interaction with the computer system. A network interface may further be part of the computer system in order to allow it to be connected to an appropriate computer network so as to receive and transmit data (e.g. scan data, sub-scans, and/or images) from and to other computing devices. The CPU, volatile memory, hard disc drive, I/O interface, and network interface, may be connected together by a bus.

The computer system is preferably configured for receiving data from the scanning device, either directly from the scanning device or via a computer network such as a wireless network. The data may comprise images, processed images, sub-scans, point clouds, sets of data points, or other types of data. The data may be transmitted/received using a wireless connection, a wired connection, and/or combinations thereof. In some embodiments, the computer system is configured for generating a digital representation of the dental object as described herein. In some embodiments, the computer system is configured for receiving data, such as sub-scans or point clouds, from the scanning device and then subsequently perform the steps of reconstruction and rendering a digital representation of the dental object. Rendering may be understood as the process of generating one or more images from three-dimensional data. The computer system may comprise computer memory for storing a computer program, said computer program comprising computer-executable instructions, which when executed, causes the computer system to carry out the method of generating a digital representation of the dental object.

### Obtaining 2D images

The method disclosed herein comprises the step of acquiring or obtaining one or more 2D images. The 2D images may be digital images, such as digital color images. The 2D images may be acquired by the scanning device disclosed herein, such as by an intraoral scanning device. Each camera unit may comprise an image sensor having an array of pixels. Each pixel may be associated with a corresponding camera ray in three-dimensional (3D) space originating from said pixel. Generally, a point located along a given camera ray corresponding to a given pixel will be imaged on the image sensor on said pixel which in turn is read out to generate an image pixel of a 2D image.

Each 2D image may be composed of an array of image pixels, such as a two-dimensional array of image pixels, corresponding to the array of pixels on the image sensor(s). Each image pixel may comprise a pixel color defined by one or more color channels. An example of a single color channel is a grayscale color channel, wherein the value of each pixel represents only an amount of light, thereby carrying intensity information. Thus, the images within the set of images may be grayscale images. Another example of a single color channel is red, green, or blue. Thus, the presently disclosed method is not limited to using pixel color information, but may instead utilize pixel intensity information.

The scanning system may be configured to continuously acquire/obtaining 2D images with a predetermined framerate during a scanning session, wherein one or more objects, such as the teeth of a patient, is scanned using an intraoral scanning device.

### Generating point cloud data

A point cloud is a discrete set of data points in space. The points may represent a 3D shape or object, in this case the dental object. Each point position has its set of Cartesian coordinates (X, Y, Z). Points may contain data other than position such as RGB colors, normal, timestamp, and others. As disclosed above, several principles for extracting depth information from one or more 2D images are known, e.g. triangulation or focus principles. When the 2D image(s) have been obtained depth information is extracted to generate a depth images, wherein the image pixels are assigned a depth, Z, value, effectively converting the 2D image(s), or a processed version of the 2D image(s), from 2D information into 3D.

When scanning a dental object using a scanning device, the captured point clouds resulting from multiple 2D images each contain snippets of the scene acquired at different times and/or from different positions, which requires alignment to generate a full map of the scanned dental object. This process termed point set registration, or simply registration or stitching, aligns point clouds obtained from different 2D images with each other to bring them into a common coordinate system, which generates the final point cloud data. The Iterative closest point, ICP, algorithm may be used to align two point clouds that have an overlap between them and are separated by a rigid transform.

### Surface sections

In general, a scanned feature may be resolved in greater detail the more polygons, i.e. greater resolution, is used to represent its surface. However, greater detail only translates into better accuracy if the scanned object had fine features to begin with. A dental object with scarce or coarse surface features, e.g. flat surfaces and/or largely homogenous coloring, may thus be sufficiently represented by fewer polygons without sacrificing the accuracy of the final 3D mesh. A dental object with fine surface features, e.g. sharp edges, textured/rough surfaces, grooves, etc. and/or diverse coloring, on the other hand may benefit from being represented by more polygons, i.e. at a higher resolution, as this allows the mesh to show the fine details.

Dental objects are, however, rarely composed entirely of coarse or fine features, but rather mostly a combination of the two. Therefore, according to the invention, the generation of the mesh may advantageously comprise dividing the scan data into a plurality of different surface sections, whereby each individual surface section may be processed according to the requirements of the features present at that part of the dental object. As an example, a dental object may be the teeth of a patient's mandibular jaw, comprising a restoration site. This may be divided into multiple surface sections, where surface sections which are rich in detail, e.g. surface sections comprising the restoration site or occlusal surfaces, can be processed at a higher resolution, while surface sections with less detail, e.g. side faces of teeth and gingiva, can be processed at a lower resolution, whereby the final mesh will be a variable resolution mesh with high resolution in the surface sections where it is needed and low resolution in the surface sections where less polygons may suffice.

### Geometric information/data

In order to determine which resolution a particular surface section requires, geometric information is extracted from the 2D image(s) and/or from the point cloud data. The geometric information is indicative of a rate of change of one or more surface characteristic(s) or to put it in other terms, it provides information of how much change the dental object has at a given area and thus also how much detail the surface section corresponding to that area has.

The one or more surface characteristic(s) may comprise contour in which case the geometric information will be indicative of how much, or little, curvature the surface in the various surface section has. The contour may be estimated based on the distribution of the points of the point cloud data of a given surface section. A wide point spread may be indicative of a surface section with high curvature and/or a high number of sharp features, i.e. a high rate of change in contour, while a lower point spread may be indicative of a surface section with low curvature and/or less sharp features, low rate of change in contour.

The one or more surface characteristic(s) may comprise color in which case the geometric information will be indicative of how much color variation the surface in the various surface section has. The color may be estimated based on the 2D images and/or the point cloud data of a given surface section. A surface section with relatively high color variation will have a high rate of change in color, whereas a surface section with relatively low color variation will have a low rate of change in color.

### Determining mesh resolution

Having obtained the geometric information for the individual surface sections, a mesh resolution may be determined for each surface section based on the rate of change of surface characteristics, also referred to as surface features, of the respective surface section. As mentioned above, a high rate of change in a surface section will lead to a higher mesh resolution being determined, while a lower rate of change will lead to a lower mesh resolution being determined. Thereby, each surface section will be rendered at a mesh resolution suitable for the surface features in that surface section of the dental object, without needlessly spending processing power on rendering a surface section in an excessive mesh resolution. On top of needless processing power, this would also result in excessive storage / data transfer requirements

The mesh resolution may be selected from two or more fixed resolution levels, wherein each resolution level is associated with a range for the rate of change of one or more surface characteristic(s), i.e. a resolution level will be selected for a surface section if the rate of change of one or more surface characteristic(s) fall within the range associated with that resolution level. The two or more fixed resolution levels may comprise a first resolution level, e.g. about 45 polygons per square mm, and a second mesh resolution level, e.g. about 180 polygons per square mm. It may be determined to use the first resolution level for a surface section when the rate of change of one or more surface characteristic(s) fall within a first range and it may be determined to use the second resolution level for a surface section when the rate of change of one or more surface characteristic(s) fall within a second range, wherein a midpoint of the first range is lower than a midpoint of the second range. Alternatively, the mesh resolution may be selected from a continuous resolution range based on the geometric information.

### Generating the digital 3D mesh

The points of the point cloud data are used to form the digital 3D mesh comprising multiple polygons representing the surface of the scanned dental object. The polygons are connected by their common edges, i.e. sides, and vertices, i.e. corners. In a preferred embodiment, the polygons are triangles. Each triangle, and other polygons for that matter, has a face, i.e. the surface defined by its edges. For flat faces, such as the face for triangles, the face has a normal, also known as normal vector, which indicates the face's orientation in space. Polygons with more than three edges may have non-flat faces which do not have a unique normal vector, i.e. the normal vector depends on the location on the face. Methods such as Delaunay triangulation for generating a mesh from point cloud data are known and may be used for this purpose. Another method may be using Poisson reconstruction, and build a volumetric signed distance field from the 2D image(s) and/or point cloud, and then extract the initial mesh as a the iso-surface/contour of that signed distance field at zero value (using marching cubes method).

The number of vertices used in the digital 3D mesh will vary and depend on the mesh resolution determined for the individual surface sections. Hence, more vertices will be inserted into the digital 3D mesh in surface sections where the geometric information indicates a higher rate of change in the one or more surface characteristics so that the mesh may accurately represent the surface features in these surface sections. Similarly, less vertices will be inserted into the digital 3D mesh in surface sections where the geometric information indicates a smaller rate of change in the one or more surface characteristics so that the processing power will not be needlessly spend rendering these surface sections at an excessive resolution.

### Determining a circumferential mesh boundary in the digital 3D mesh

In order to determine a circumferential mesh boundary in the digital 3D mesh, it may be required to identify an area of interest in the dental object, corresponding to the dental procedure at hand. In the case of restorative dentistry, an area of interest may be a margin line on a scanned preparation site. The digital 3D mesh may be inputted into a trained model, e.g. run on an NPU of the processing device, trained to identify the area of interest, e.g. a margin line of a preparation site. The trained model may output a subsection of the digital 3D mesh delimited by the circumferential mesh boundary and comprising the area of interest without the circumferential mesh boundary. The trained model may perform a coarse identification of the area of interest and set the circumferential mesh boundary at a buffer distance to the identified area of interest, e.g. margin line, whereby it is ensured that the entire area of interest is included within the determined circumferential mesh boundary. Alternatively or additionally, determining a circumferential mesh boundary in the digital 3D mesh may be performed based on input by a user, e.g. by identifying the circumferential mesh boundary in a graphical user interface (GUI) showing a rendering of the 3D mesh, where the user may input the circumferential mesh boundary or make corrections to the coarse identification of the area of interest done by the processing device. The subsection of the digital 3D mesh delimited by the circumferential mesh boundary may be extracted from the digital 3D mesh for the subsequent processing steps.

### Determining a target shape with a circumferential target boundary

In general, the target shape may be arbitrarily, however for mesh flattening into a 2D mesh the target shape must be planar. The target shape may often be selected a being a circle, which due to its continuous rotational symmetry may show fewer distortions in the mesh after flattening.

### Performing coherent mapping

The mesh flattening method involves denoting so-called anchor points. An anchor point annotates a fixed position for a vertex of the mesh boundary, this position may be the original vertex position or an entirely new one. Before flattening the 3D mesh into a 2D mesh, the boundary vertices should be anchored/translated to the circumferential target boundary of the planar target shape. To achieve this, each vertex of the boundary vertices are subjected to coherent mapping to find an anchor point on the target boundary corresponding to the respective vertex.

A coherent mapping should encompass a few key properties, such as:
Uniqueness: Each unique boundary vertex xᵢ ∈ *R*³ should map to a unique anchor point *x'ᵢ* ∈ Rⁿ. Here Rⁿ denotes the number of dimensions, which for flattening to a 2D mesh would be *x'ᵢ* ∈ *R*².

Order-preserving: Each boundary vertex should be mapped in a way that is transitive with respect to placement along the target boundary, i.e. if the order of the boundary vertices are *A* → *B* → C, then a mapping *f*(*·*):*Rⁿ* → *R^{m}* should ensure that the order remains after the mapping, *f*(*A*) → *f*(*B*) → *f*(*C*).

These properties seek to eliminate the chance of introducing self-intersection in the mesh during the mapping.

A goal of the method and system of the invention is to coherently map the ordered set of boundary vertices *X =* {*x*₁, *x*₂, ... *xₙ*} to a set of anchor points on the boundary of the target shape *X' =* {*x'*₁, *x'*₂, ... *x'ₙ*} in a way that satisfies the uniqueness and order-preserving properties described above. First, the method this invention concerns is described generally. Given an ordered set of boundary vertices X = {*x*₁, *x*₂, ... *xₙ*}*:*
1. Calculate the total boundary length/circumference of the circumferential mesh boundary in the digital 3D mesh, i.e. the sum of all edge lengths ${D}_{original} = {\sum }_{i = 1}^{n - 1} \left‖{x}_{i}-{x}_{i + 1}\right‖$*,* where *x*₁ = *xₙ* for cyclic boundaries.
2. Calculate the total length of the target boundary of the target shape, *D_{target}.* Often, this is given by the choice of target shape.
3. Construct an initial pair, (*x*₁, *x'*₁), of an initial boundary vertex of the circumferential mesh boundary in the digital 3D mesh, *x*₁, and its corresponding mapping onto an initial anchor point on the target shape boundary, *x*'₁. The initial boundary vertex, *x*₁, may be arbitrarily selected from the boundary vertices, and the initial anchor point, *x'*₁, may be set as an arbitrary point on the circumferential target boundary.
4. Map the remaining boundary vertices to the target shape by the following rule. For each boundary vertex *xⱼ* for j = 2, 3,... n.
   a. Calculate the boundary distance covered from x₁ to *xⱼ,* ${D}_{j} = {\sum }_{i = 1}^{j - 1} \left‖{x}_{i}-{x}_{i + 1}\right‖ .$
   b. Calculate the relative distance covered from *x*₁ to *xⱼ*, ${R}_{j} = \frac{{D}_{j}}{{D}_{original}}$*.*
   c. Calculate *x*'*ⱼ* as the anchor point on the circumferential target boundary that amounts to covering a relative distance of *Rⱼ* from *x*'₁ to *x*'*ⱼ* along the circumferential target boundary.

Now, an implementation of the method for a target shape being a unit disk in the XY-plane with its normal along the Z-axis is disclosed. Given an ordered set of boundary vertices *X =* {*x*₁, *x*₂, ... *xₙ*}:
1. Calculate the total boundary length of the circumferential mesh boundary in the digital 3D mesh, i.e. the sum of all edge lengths ${D}_{original} = {\sum }_{i = 1}^{n - 1} \left‖{x}_{i}-{x}_{i + 1}\right‖$*,* where *x*₁ *= xₙ* for cyclic boundaries.
2. For a unit disk as the target shape, the boundary length of the circumference of the target boundary of the target shape known to be *D_{target} = 2π.*
3. Construct an initial pair, (*x*₁, *x*'₁), by setting *x*'₁ = (cos(*r*), sin(*r*), 0), where *r* ∈ [0, 2*π*] is an arbitrary radian offset.
4. Map the remaining boundary vertices to corresponding anchor points on the circumferential target boundary by the following rule. For each boundary vertex xⱼ for j = 2, 3,...n.
   a. Calculate the boundary distance covered from *x*₁ to *xⱼ,* ${D}_{j} = {\sum }_{i = 1}^{j - 1} \left‖{x}_{i}-{x}_{i + 1}\right‖ .$
   b. Calculate the relative distance covered from x₁ to *xⱼ,* ${R}_{j} = \frac{{D}_{j}}{{D}_{original}}$*.*
   c. Calculate *x'ⱼ =* (*cos*(*r* + *Rⱼ*2*π*), sin(r + *Rⱼ*2π), 0), as a full-rotation around the unit-circle amounts to rotating 2*π* radians.

The obtained set of anchor points, also referred to as mapped boundary vertices, *X' =* {*x'*₁, *x'*₂, ... *x'ₙ*}, can be used as anchor points for a subsequent step of flattening the vertices of the digital 3D mesh that are surrounded by the circumferential mesh boundary to the target shape.

### Mesh flattening

After the boundary vertices have been mapped and translated to the target boundary according to the invention, the inner vertices, i.e. the vertex or vertices surrounded by the circumferential mesh boundary, may be flattened to the target shape. Flattening the inner vertices may be done as disclosed in US11321918B2 incorporated herein in its entirety.

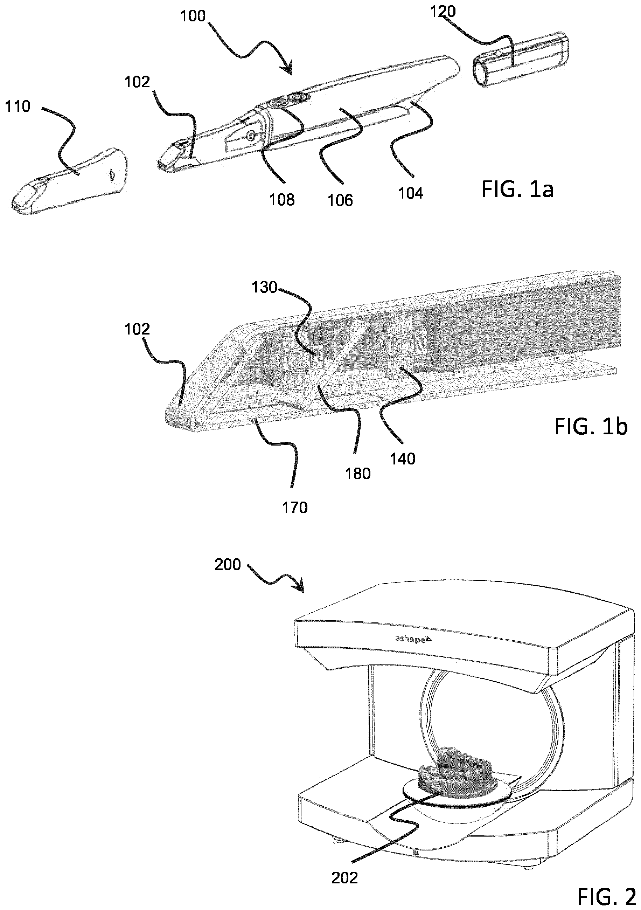

FIG. 1a illustrates an intraoral scanner 100 used in the scanning system 700 or method of the invention. The intraoral scanner 100 comprises a distal end 102 configured to be at least partially inserted into the patient's mouth. The distal end 102 comprises a scanner window 150 through which light can be projected onto the dental object 202 to be scanned and through which images of the illuminated dental object 202 can be captured. The distal end 102 is further configured for having a sleeve 110 releasably attached over it. The sleeve 110 is provided as a hygienic barrier and may be changed between patients to avoid contamination between patients. The sleeve 110 comprises a sleeve window which, when the sleeve 110 is attached onto the distal end 102, overlaps at least partially with the scanner window 150.

The intraoral scanner 100 also comprises a proximal end 104 opposite the distal end 102. The proximal end 104 may comprise an opening configured for receiving and holding a battery 120, preferably a rechargeable battery, for powering the intraoral scanner 100. Alternatively, the battery 120 may be arranged inside the intraoral scanner 100, in which case the battery can be recharged through a power interface of the intraoral scanner 100. Alternatively, the intraoral scanner 100 may be wired in which case the power may be supplied by a wire rather than a battery 120. Between the distal end 102 and the proximal end 104, the intraoral scanner 100 comprises a scanner body 106 configured for being held by a user, e.g. a dentist or a dental technician. For the user to control the intraoral scanner 100 during scanning sessions, the intraoral scanner 100 comprises a scanner interface 108, which may comprise one or more push buttons and/or one or more touch interfaces.

FIG. 1b illustrates a cross-sectional view of a distal end 102 of an intraoral scanner 100 used in the scanning system 700 or method of the invention. The shown intraoral scanner 100 comprises multiple camera units 140, e.g. four or eight camera units 140, each configured for acquiring 2D images of the object 202. By having multiple camera units 140, the intraoral scanner 100 may acquire multiple 2D images substantially simultaneously. The shown intraoral scanner 100 comprises multiple projector units 130 configured for projecting light, e.g. patterned light, onto the dental object 202. Both the camera units 140 and the projector units 150 are arranged such that their optical axes are parallel or slightly angled to a longitudinal axis of the intraoral scanner 100. To allow the camera units 140 and the projector units 150 to view/illuminate the object 202, mirrors 180 are arranged in their optical path to direct their optical path towards the scanner window 170.

FIG. 2 illustrates a lab scanner 200 used in the scanning system 700 or method of the invention. Where intraoral scanners 100 are usually used in dentist clinics, lab scanners 200 are mostly used in dental laboratories which manufacture or customize a variety of products for dentist clinics. The lab scanner 200 is configured for scanning a plastic or gypsum model 202 molded from the subject's teeth, which is arranged in a scan volume of the lab scanner 200.

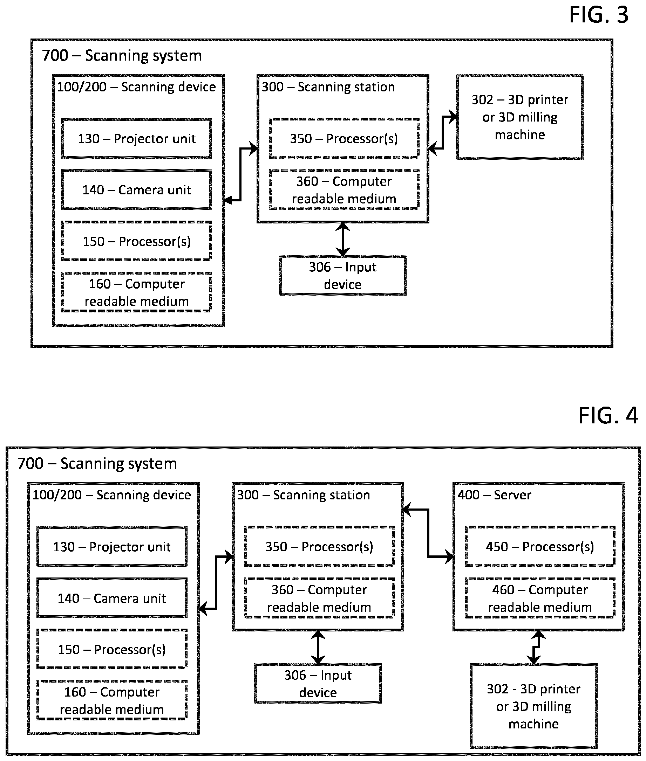

FIG. 3 shows a block diagram of a scanning system 700 of the invention. The scanning system 700 comprises a scanning device 100; 200, which may be an intraoral scanner 100 or a lab scanner 200, e.g. the ones illustrated in FIG. 1 and FIG. 2. The scanning device 100; 200 comprises one or more projector unit(s) 130 configured for illuminating the dental object 202, and one or more camera unit(s) 140 configured for capturing 2D images of the illuminated dental object 202.

The scanning device 100; 200 may, at least during scanning sessions, be operationally connected to a scanning station 300, such as a laptop or a desktop computer. The scanning station 300 comprises an input device 306, such as a mouse, touchpad, and/or keyboard, which may be used by the user to control parts of the scanning process and/or the subsequent processing of the 2D images to generate the 3D mesh. The scanning station 300 comprises a display, which may be used for displaying the 3D mesh and/or for providing a viewfinder to help the user navigate the intraoral scanner 100 and guide them so that they can arrange the intraoral scanner 100 relative to the dental object 402.

To process the one or more 2D images captured during a scanning session, the scanning system comprises a processing device comprising one or more processor(s) 150, 350. The one or more processor(s) 150, 350 may be located in the scanning device 100; 200 and/or in the scanning station 300. The scanning system 700 further comprises a computer readable medium 160, 360 comprising instructions which, when executed by the scanning system 700 cause the scanning device 100, 200 and/or the scanning station 300 to carry out the method of the invention. The computer readable medium 160, 360 may be located in the scanning device 100; 200 and/or in the scanning station 300.

FIG. 4 shows a block diagram of another scanning system 700 of the invention. The scanning system 700 of FIG. 4 differs from the of FIG. 3 in that it further comprises a server 400 operationally connected to the scanning station 300. The server 700 may be located locally, i.e. close to the scanning station 300, and be operationally connected to the scanning station 300 via a local area network, LAN. The server 700 may be located remotely, i.e. far the scanning station 300, and be operationally connected to the scanning station 300 via a wide area network, WAN, e.g. the internet. The server 400 may be configured for executing at least part of the method of the invention, e.g. some or all of the steps related to data processing. To this end, the server 400 comprises at least some, if not all, of the one or more processor(s) 150, 350, 850, and optionally also part of, or all of, the computer readable medium 160, 360, 860. In general, the processing device, i.e. the one or more processor(s) 150, 350, 850 and/or the computer readable medium 160, 360, 860 may reside in one of the scanning device 100, 200, the scanning station 300, or the server 400, or they may be distributed amongst two or three of these devices in any combination.

The scanning system 700 may also comprise a 3D printer and/or 3D milling machine 302 configured for manufacturing objects for dental treatments based on data generated by the scanning system 700. If the scanning system 700 is used for a patient needing restorative dentistry, the 3D printer and/or 3D milling machine 302 may be used for manufacturing a dental restoration, e.g. a bridge, crown, or a veneer, based on a digital 3D mesh generated by the scanning system and margin line data, i.e. a margin line identified in the 3D mesh by the method of the invention.

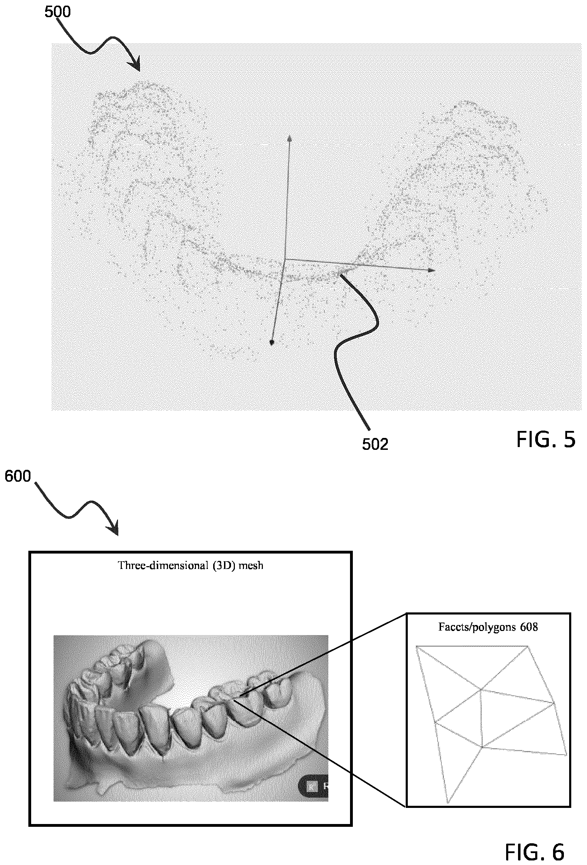

FIG. 5 shows a visualization of point cloud data 500 comprising multiple points 502, representing surface points of the dental object 202. The point cloud data 500 is generated by extracting depth information from the one or more 2D images obtained during the scanning session. The depth information is extracted based on the working principle of the scanning device 100, 200. Triangulation based scanning systems 700 determines a point in 3D space given its projections onto two, or more, camera pixel(s) and or projector pixel(s), while focus based scanning systems 700 determine depth by sweeping a lens linearly and determining the focus distance at which a given point in 3D space is in focus based on the position of the lens.

Point cloud data 500 gathered from multiple vantage points, i.e. position and/or orientation of the scanner 100, 200 relative to the dental object 202, is registered into a common coordinate system. The registration may be performed using an Iterative Closest Point, ICP, algorithm, which keeps one point cloud, the reference or target, fixed, while transforming the other, the source, to best match the reference. The transformation, i.e. translation and/or rotation, is iteratively estimated in order to minimize an error value, typically the sum of squared differences between the coordinates of the matched pairs. In the shown figure, the final point cloud data represents dental object 202 which is an entire dental arch of a patient's 400 mandibular jaw.

FIG. 6 shows a 3D mesh 600 of a dental object 202 which is an entire dental arch of a patient's 400 mandibular jaw. The 3D mesh 600 comprises the digital 3D mesh comprising multiple polygons 608, said digital 3D mesh representing the surface of the scanned dental object 202. For 3D models, triangular polygons 608 are advantageous for multiple reasons.

Triangles are always planar, meaning they lie flat in their respective plane. This simplifies many mathematical computations, such as rendering, shading, and collision detection. Linear interpolation across a triangle is straightforward, which is crucial for shading techniques like Gouraud shading and texture mapping.

Any surface, regardless of its complexity or curvature, can be approximated by a sufficient number of triangles. This makes triangles highly versatile for modelling a wide range of shapes. Triangular meshes allow for varying levels of detail. A complex surface can be represented with a high number of small triangles for detailed regions and fewer, larger triangles for less detailed regions. A triangular mesh thus offers a high degree of geometric flexibility.

Graphics hardware (GPUs) is optimized for processing triangles. Operations like transformations, lighting calculations, and rasterization are highly efficient with triangles. Algorithms for mesh operations, such as subdivision, simplification, and morphing, are well-developed and efficient for triangular meshes. Further, many 3D graphics standards and file formats (e.g., STL, OBJ, and 3DS) natively support triangular meshes, ensuring broad compatibility across different software and platforms. Most 3D modelling and animation software is designed to work with triangular meshes, providing robust tools for editing and manipulating these meshes. A triangular mesh is therefore more compatible with various hardware/software platforms which the user may use for working with the 3D mesh 600.

Triangles ensure consistent behaviour in various operations. For example, a polygon 608 with more sides can be non-planar or concave, complicating calculations. Triangular meshes can be easily subdivided to create finer details. Subdivision algorithms like Loop subdivision work seamlessly with triangles. Reducing the number of triangles in a mesh while preserving overall shape and appearance is a well-studied problem, with many effective algorithms available. In summary, triangular meshes offer a balance of mathematical simplicity, geometric flexibility, and computational efficiency, making them an ideal choice for representing 3D objects.

As will be described in greater detail below, the number of polygons 608 used for various surface sections of the digital 3D mesh will depend on the regional level of detail in the respective surface section as indicated by the geometric information associated with that surface section.

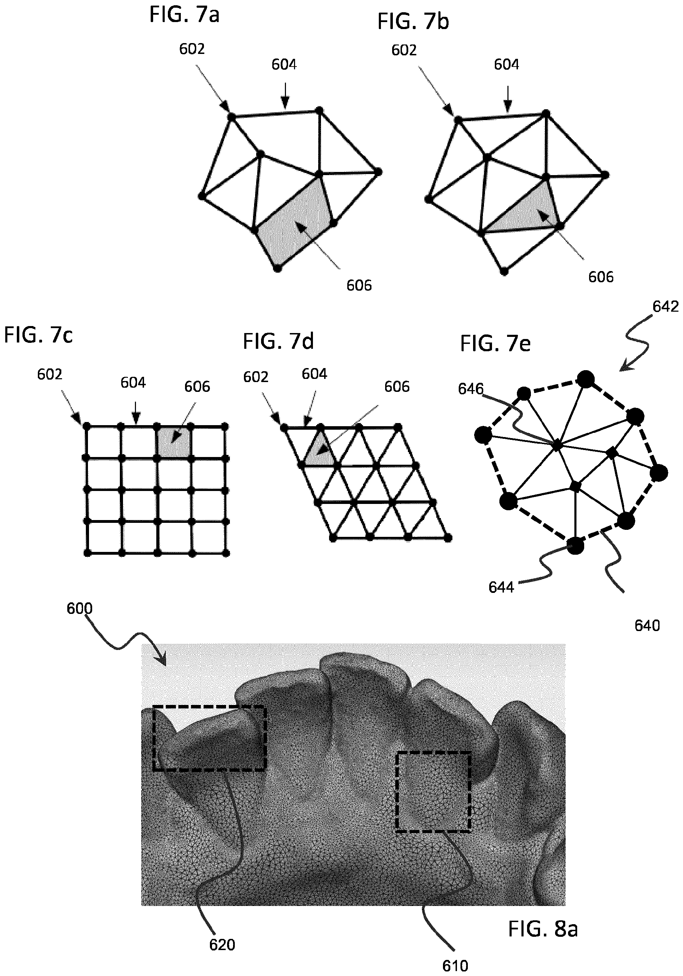

FIG. 7a-7e show examples of meshes according to various embodiments. As noted above, the digital 3D mesh/2D mesh comprises multiple polygons 608. The polygons 608 are defined by their corners, i.e. vertices 602, and their edges 604. The area enclosed by a number of edges depending on the type of polygon 608 applied, e.g. three for triangles, is referred to as the face 606. In various embodiments, meshes may differ in several ways. Faces 606 may have a consistent number of vertices, or different numbers of vertices. Edges 604 may be of consistent length, or of different lengths. Non-boundary vertices may have different numbers of neighboring vertices, or a consistent number of neighboring vertices.

FIG. 7a is a mesh with faces with different number of vertices 602, edges 604 of different lengths, and non-boundary vertices 602 with different numbers of neighbouring vertices 602, according to an embodiment. FIG. 7b is a mesh with faces 606 with a consistent number of vertices 602, edges 604 of different lengths, and non-boundary vertices 602 with different numbers of neighbouring vertices 602, according to an embodiment.

FIG. 7c is a mesh with faces 606 with a consistent number of vertices 602, edges 604 of consistent length, and non-boundary vertices 602 with a consistent number of neighboring vertices 602, according to an embodiment. FIG. 7d is a mesh with faces 606 with a consistent number of vertices 602, edges 602 of consistent length, and non-boundary vertices 602 with a consistent number of neighboring vertices 602, according to an embodiment. Different meshes serve different functions, but in representing 3D objects, meshes with triangular faces 606 such as FIG. 7b are often used for the reasons given above.

Each polygon 608 may be assigned a color value so that the digital 3D mesh not only represents the shape of the scanned dental object 202 but also its color. This is advantageous when deriving dental prosthetics, e.g. bridges, crowns, and/or veneers, from the 3D mesh 600 as the prosthetic(s) can then be color matched to the patient's other teeth, e.g. adjacent teeth of the restoration site where the prosthetic is going to be arranged.

FIG. 7e is a triangular mesh used to illustrate the terminology herein. FIG. 7e shows a subsection 642 of a 3D mesh 600. The subsection 642 is delimited by a circumferential mesh boundary 640 (shown as a dashed line in FIG. 7e). which is defined by the boundary vertices 644 (shown as solid circles in FIG. 7e) and the edges connecting the boundary vertices 644, which may also be referred to as the boundary edges. In some embodiments, the total distance around the circumferential mesh boundary 640 is used for mapping boundary vertices 644 to their corresponding anchor points. The total distance around the circumferential mesh boundary 640 is the sum of the lengths of the boundary edges. The vertices surrounded by the boundary vertices 644 are referred to as the inner vertices 646 (shown as solid circles in FIG. 7e).

FIG. 8a-c show an example of a 3D mesh 600 generated according to the invention. The 3D mesh 600 represents a dental object 202 being a set of teeth and gingiva. The digital 3D mesh used for the 3D mesh comprises multiple triangles, wherein the resolution, i.e. the number of polygons 608, used for various surface sections of the mesh varies depending on the level of detail.

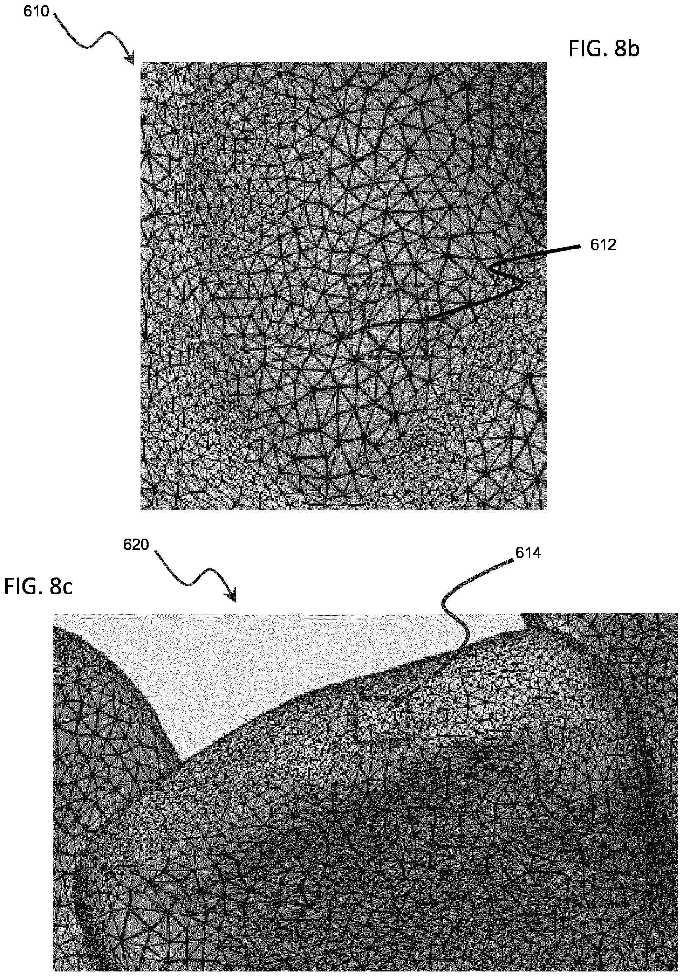

FIG. 8b shows a first region 610 of the digital 3D mesh. The first region 610 contains a lingual surface of an incisor tooth which is a relatively flat surface where the level of detail/changes in the surface characteristics is relatively low. Accordingly, the resolution determined suitable for the surface sections 612 of this region 610 is also low. The resulting mesh in the surface sections 612 of this region 610 therefore comprise fewer polygons 608 per area as this is sufficient to resolve the relative coarse features of the first region 610 without spending excessive processing power on generating superfluous polygons 608. FIG. 8c shows a second region 620 of the digital 3D mesh. The second region 620 contains an incisal surface of an incisor tooth which is a type of surface with high curvature and thus the level of detail in the surface characteristics is relatively high. Accordingly, the resolution determined suitable for the surface sections of this region 620 is also high. The resulting mesh in the surface sections 614 of this region 620 therefore comprise more polygons 608 per area which allows the mesh to accurately represent the fine features. FIG. 8c and 8b have been magnified the same amount for easy comparison of the two. By comparing the two, one can easily see that the relatively flat lingual surface of the tooth located in the first region 610 has been resolved at a lower resolution resulting in a lower density of polygons 608 than the incisal surface located in the second region 620.

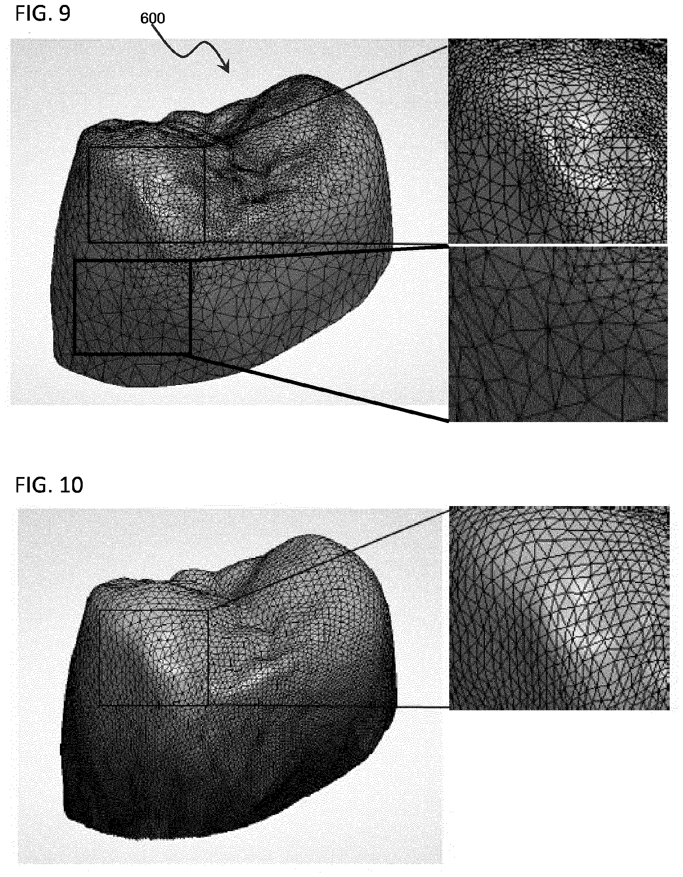

FIG. 9 shows another 3D mesh 600 of a dental object 202 which is a molar tooth of a patient 400. As can be seen in the zoom-ins on the right, the relatively flat side face has been determined to have a low rate of change in surface characteristics, in this case a low rate of change in contour, and as a result the mesh resolutions determined to be suitable for these surface sections have been determined to be low. The occlusal surface on the other hand, has been determined to have a high rate of change in surface characteristics, in this case a high rate of change in contour, and as a result the mesh resolutions determined to be suitable for these surface sections have been determined to be high.

To determine the mesh resolution required for a surface section, geometric information for that surface section must first be obtained. The geometric information is indicative of a rate of change of one or more surface characteristic(s), such as a rate of change in contour and/or color, and therefore provides the information needed to determine the mesh resolution required for the mesh of the 3D mesh 600 to accurately represent the surface of the dental object 202 in this surface section.

The geometric information is obtained from the one or more 2D images and/or the point cloud data 500 depending on which surface characteristics are needed. If color information is required, this may be obtained from color information in the 2D images and/or color information in the point cloud data extracted from the 2D image(s). If contour information is required, this may be obtained from the point cloud data 500. Contour information may be obtained by comparing the surface gradient at neighbouring points, e.g. by performing ray tracing to determine how light from the one or more projector units 130 was reflected at a point of the point cloud data and comparing it to how light was reflected of its neighbouring points, or by determining how closely or widely distributed point are in a surface section, i.e. points that are widely distributed indicates a high degree of change in the surface contour, while point that are closely distributed indicates a low degree of change in the surface contour.

FIG. 10 illustrates an initial mesh generated comprising multiple initial polygons based on the point cloud data 500. The initial mesh is generated before the mesh of the 3D mesh at a preset initial resolution. The initial mesh may be used to obtain at least part of the geometric information. This may be done by deriving an initial mesh to data fit error metric indicating how well an initial polygon fits the points of the point cloud date 500 used to generate it. If the points are highly distributed around the initial polygon the geometric information will show that it has a bad fit error, and if the points are closely distributed to the initial polygon the geometric information will show that it has a good fit error. A bad fit error will mean that a higher mesh resolution will be preferential, while a good fit error will mean that a lower mesh resolution will be sufficient.

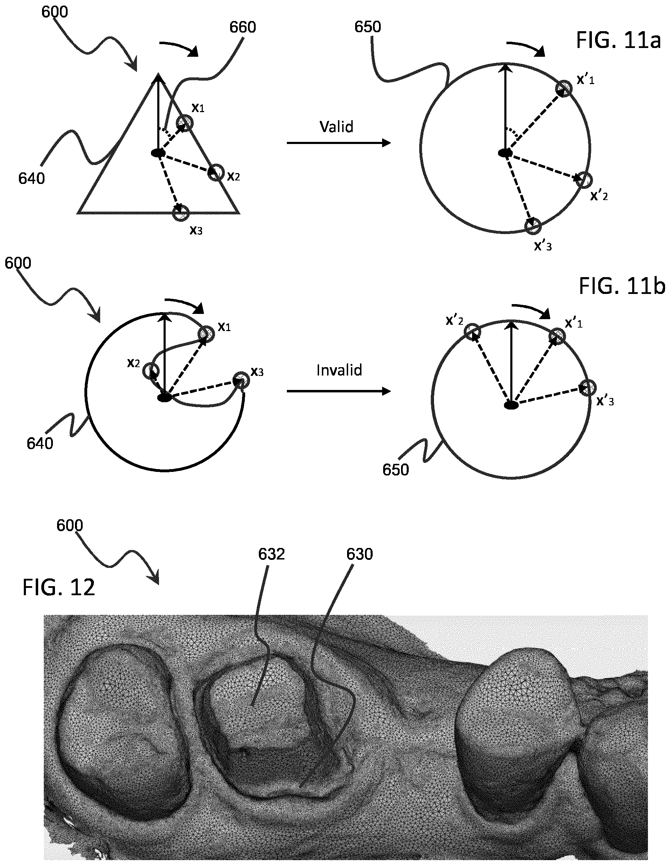

FIG. 11a and 11b illustrate two examples of boundary vertex mapping according to the prior art. In FIG. 11a the circumferential mesh boundary 640, represented by a triangle, is monotonous meaning that when one goes around the circumferential mesh boundary 640 the radial angle 660 only increases until you reach the starting point on the circumferential mesh boundary 640. For such a circumferential mesh boundary 640, the mapping rules known from the prior art would result in valid mapping, as the mapping rules of the prior art used the radial angle 660 of a boundary vertex x₁; x₂; x₃ to determine an anchor point x'₁; x'₂; x'₃ on the circumferential target boundary 650.

However, not all circumferential mesh boundaries 640 can be assumed to be monotonous as shown in FIG. 11b. In Fig. 11b, the circumferential mesh boundary 640 curves back on itself leading to a decrease in the radial angle 660 when moving from the boundary vertex x₁ to the boundary vertex x₂. When using the mapping rules of the prior art on such a circumferential mesh boundary 640 the resulting anchor points x'₁; x'₂; x'₃ will be invalid as the requirements of uniqueness and order preservation are no longer fulfilled leading to self-intersections along the target boundary 650.

FIG. 12 shows a 3D mesh 600 having an example of circumferential mesh boundary 640 that cannot be guaranteed to be monotonous in the form of a margin line 630. FIG. 12 further illustrates the advantage of mesh flattening as the margin line 630 cannot be fully identified as parts of it are hidden, i.e. occluded, from view the tooth being restored 632, also referred to as a preparation site.

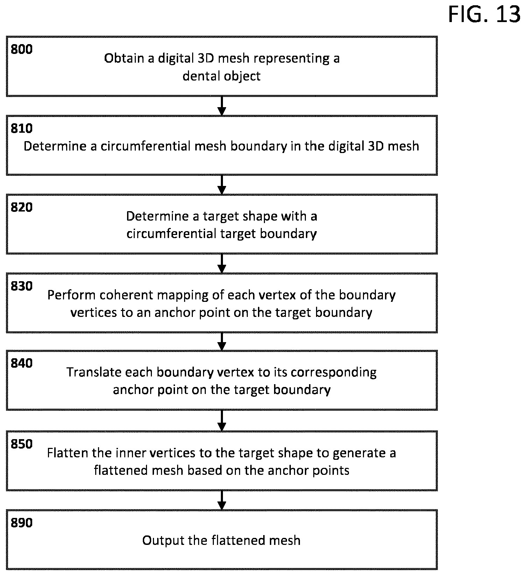

FIG. 13 is a flowchart showing an embodiment of the method of the invention which can be used for flattening a 3D mesh 600, for example for identifying/extracting the margin line 630, e.g. from the 3D mesh 600 shown in FIG. 12. The method is initiated by obtaining 800 a digital 3D mesh representing a dental object 202. This may be done by importing a 3D mesh 600 acquired elsewhere, or by scanning a patient with an intraoral scanner 100 or an impression of the patient's teeth with a lab scanner 200. If the 3D mesh 600 is acquired through scanning the step of obtaining 800 a digital 3D mesh representing a dental object 202 may also require image processing to extract depth information from the 2D images acquired by the intraoral/lap scanner 100; 200 to generate the 3D mesh 600. This may also involve obtaining geometric information from the acquired 2D images or scan data generated through processing the acquired 2D images to determine a resolution for the surface sections of the 3D mesh 600.

Having obtained 800 the 3D mesh 600, the method comprises determining 810 a circumferential mesh boundary 640 in the digital 3D mesh 600. This may involve detecting an input of a user, such as the user drawing a closed boundary around an area of interest in a GUI 900 displaying the 3D mesh 600. Alternatively, the circumferential mesh boundary 640 may be set automatically by an algorithm, e.g. a trained model, configured to perform a coarse identification of the area of interest 644, e.g. a margin line 630. Having performed a coarse identification, a buffer distance may be added to ensure that the area of interest 644 falls within the determined circumferential mesh boundary 640. The subsection of the 3D mesh 600 defined by the circumferential mesh boundary 640, i.e. the part of the 3D mesh 600 falling within the circumferential mesh boundary 640, may be extracted from the rest of the 3D mesh. The vertices forming the circumferential mesh boundary 640 are referred to as boundary vertices herein and the vertices falling within the circumferential mesh boundary 640 are referred to as inner vertices.

Next, the method comprises determining 820 a target shape with a circumferential target boundary 650. The disclosed method may work with any arbitrary 2D shape; however, a circle will cause fewer edge distortions due to its continuous rotational symmetry.

To flatten the subsection of the 3D mesh 642 falling within the circumferential mesh boundary 640, the method comprises performing 830 coherent mapping of each vertex of the boundary vertices to an anchor point on the target boundary 650. This step is performed in a manner wherein each mapped pair of boundary vertex and anchor point satisfy the criteria of uniqueness and order preservation mentioned above.

A way of ensuring that these criteria are met is disclosed above, and it comprises selecting an initial vertex of the boundary vertices and an initial anchor point on the target boundary, and mapping the initial vertex to the initial anchor point, after which, for each vertex of the boundary vertices other than the initial vertex, a relative distance, i.e. relative to the total circumference of the mesh boundary 640, along the mesh boundary 640 between the respective vertex and the initial vertex is determined, and, for each vertex of the boundary vertices other than the initial vertex, mapping the respective vertex to an anchor point that is the same relative distance, i.e. relative to the total circumference of the target boundary 650, along the target boundary 650 from the initial anchor point as the relative distance between the respective vertex and the initial vertex.

The method may then comprise translating 840 each boundary vertex to its corresponding anchor point on the target boundary 650, and flattening 850 the inner vertices to the target shape to generate a flattened mesh 652 based on the anchor points. The method may then comprise outputting 890 the resulting flattened mesh 652 for further processing depending on the desired application or for displaying on a display for the user to inspect.

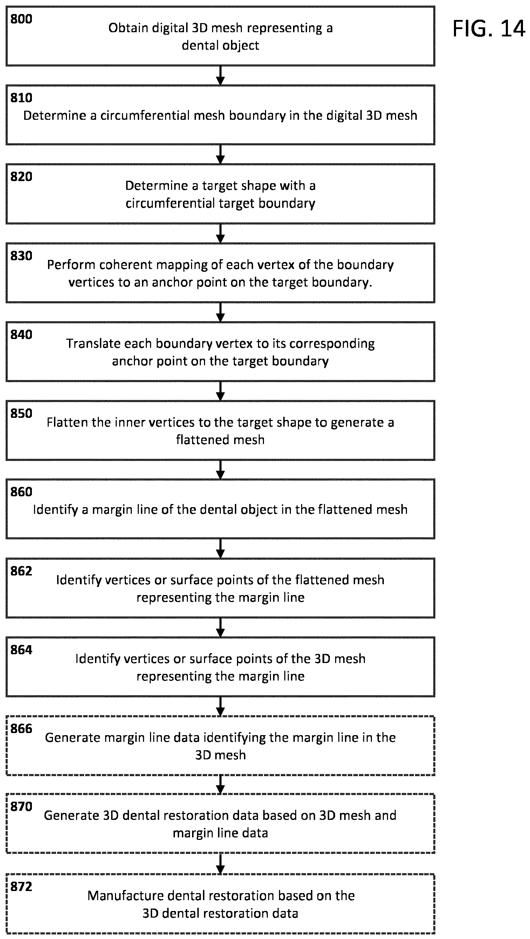

FIG. 14 shows a flow chart similar to that of FIG. 13. The method illustrated in FIG. 14 proceeds from the step of flattening 850 the inner vertices 646 to the target shape to generate a flattened mesh 652, by further comprising the step of identifying 860 a margin line 630 of the dental object in the flattened mesh 652, and identifying 862 the vertices or surface points of the flattened mesh 652 that represents the margin line 630. It is noted that surface points of the flattened mesh 652, contrary to vertices, may lie on either of a vertex 602, an edge 604, or a face 606 of the flattened mesh 652. Hence identifying surface points representing the margin line 630 will provide a more accurately identified margin line than using vertices of the flattened mesh. This step may be performed based on input by a user, e.g. the user identifying the margin line 630 through input in a GUI displaying the flattened mesh 652. This step may be performed, fully or partially, by a second trained model configured for identifying margin lines in 2D meshes.

The method may proceed by, based on the vertices or surface points of the flattened mesh 652 identified to represent the margin line 630, identifying 864 vertices or surface points of the 3D mesh 600 representing the margin line 630. This may be done by determining which vertices of the 3D mesh 600 correspond to those of the flattened mesh 652 identified to represent the margin line 630. Alternatively, it may be done by tracing surface points of the flattened mesh 652 identified as representing the margin line back to the 3D mesh 600, whereby the margin line is identified in the 3D mesh 600 and surface points of the 3D mesh 600 representing the margin line 630 may be identified. It is noted that surface points of the 3D mesh 600, contrary to vertices, may lie on either of a vertex 602, an edge 604, or a face 606 of the 3D mesh 600. Hence identifying surface points representing the margin line 630 will provide a more accurately identified margin line than using vertices.

The method may output the 3D mesh 600 with the identified margin line 630, e.g. on a display for inspection by a user. Optionally, it may proceed by generating 866 margin line data identifying the margin line 630 in the 3D mesh 600. This may be desirable if the method is being used in a restorative dental workflow where a restoration suitable for placement on the tooth having the margin line 630 needs to be designed. The method may thus optionally comprise generating 870 3D dental restoration data representing the shape of a dental restoration configured for placement on the identified margin line 630 based on 3D mesh 600 and the margin line data. The 3D dental restoration data may in turn be output, e.g. to a 3D printer or 3D milling machine for the step of manufacturing 872 a dental restoration shaped to fit the preparation site and margin line 630 based on the 3D dental restoration data.

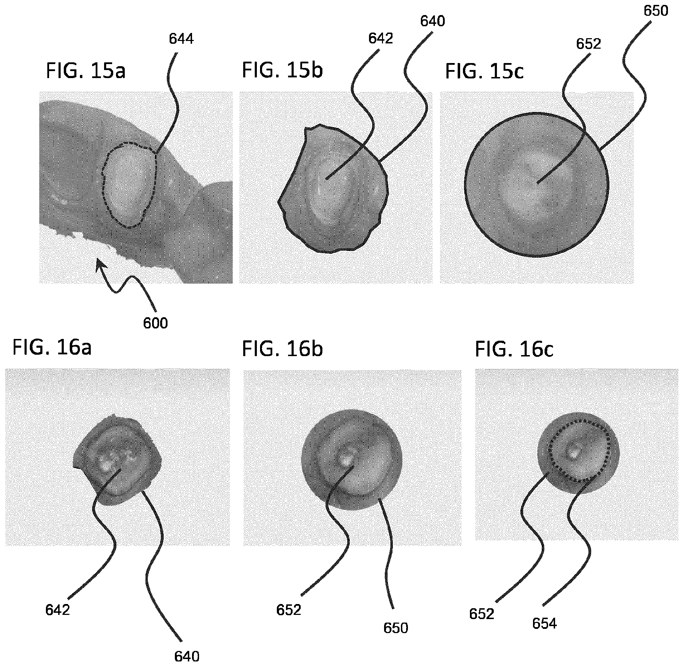

FIG. 15a-c show the flattening of a 3D mesh 600 according to the method of the invention. Firstly, in FIG. 15a, an area of interest 644 in the 3D mesh 600 is determined. In the case shown, the area of interest 644 is identified by a first trained model configured for coarsely identifying a margin line 630 in 3D. The identified area of interest 644 is provided with a buffer distance, i.e. a circumferential buffer zone, whereby the circumferential mesh boundary 640 is determined and the margin line 630 ensured to fall within the circumferential mesh boundary 640.

In FIG. 15B, the subsection 642 of the 3D mesh defined by the circumferential mesh boundary 640 is extracted from the rest of the 3D mesh. The boundary vertices forming the circumferential mesh boundary 640 are coherently mapped to a planar circle as described above to determine their corresponding anchor points on the target boundary 650. The boundary vertices are then translated to their anchor points on the target boundary 650 and the inner vertices flattened to the planar circle accordingly. The flattened mesh 652 generated hereby is shown in FIG. 15c.

FIG. 16a-c show processing of a 3D mesh similar to that of FIG. 15a-c. FIG. 16a shows a subsection 642 of a 3d mesh 600 after the step of determining 810 a circumferential mesh boundary 640 in the digital 3D mesh 600. The resulting subsection 642 has the boundary vertices defining the circumferential mesh boundary 640 and inner vertices representing a dental object which is a preparation site with a margin line 630. As described above, determining 810 the circumferential mesh boundary 640 may be performed using a first trained model configured for performing coarse identification of the area of interest 642 (a margin line in FIG. 16a-c) in a 3D mesh.

FIG. 16b shows the subsection 642 of FIG. 16a after flattening according to the method of the invention, whereby the flattened mesh 652 is generated. As the margin line 630 is fully visible in the flattened mesh 652, it is possible to identify the margin line and the vertices representing it in the flattened mesh 652. This may be done by inputting the flattened mesh 652 into a second trained model configured for identifying a margin line in 2D. FIG. 16c shows the flattened mesh 652 along with the identified margin line 654 (represented by a dashed line). The margin line 630 may then be identified in the 3D mesh 600 by identifying the vertices of the 3D mesh 600 corresponding to the vertices in the flattened mesh 652 representing the margin line 630, i.e. the vertices identified by identifying a margin line in 2D.

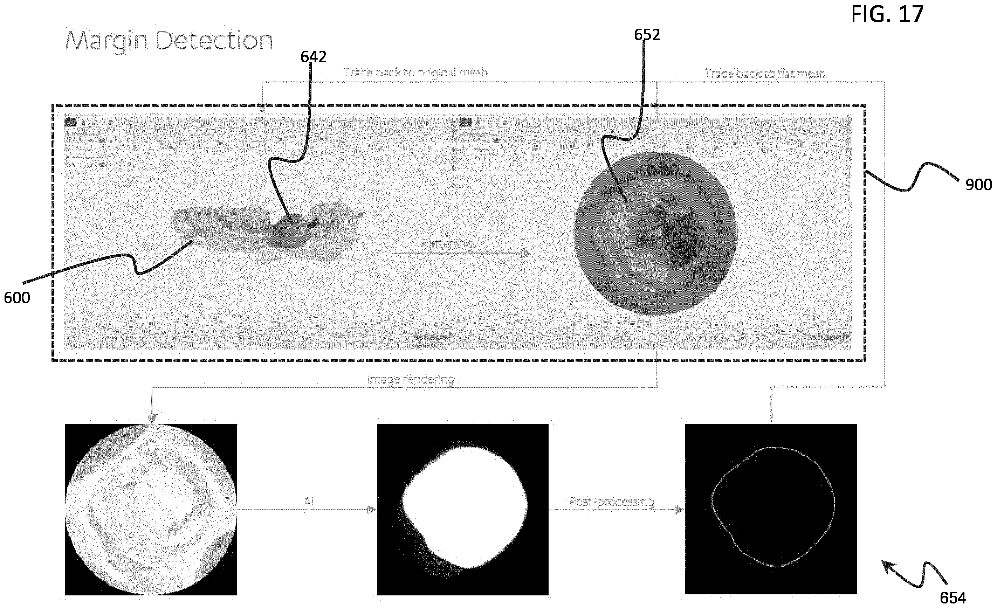

FIG. 17 illustrates the method of the invention used in margin line 630 detection. The upper half of FIG. 17 shows a Graphical User Interface, GUI, 900 which can be shown in a display or multiple displays, e.g. a computer screen, of the scanning system 700 of the invention. The GUI 900 shows a rendering of the 3D mesh 600 with the subsection 642 identified by the first model highlighted. In the shown embodiment, the subsection 642 is identified by coarsely identifying the margin line 630 by using a first model configured for recognizing a preparation site in 3D and adding a buffer zone around the recognized preparation site, whereby a circumferential mesh boundary 640 surrounding the margin line is determined.

In the right half of the GUI 900, the flattened mesh 652 of the subsection 642 identified by the first model, flattened by the method of the invention is shown. It is noted that the left and right halves of the GUI 900 may be shown sequentially on a single screen or simultaneously on one or more screens, e.g. dual desktop. The lower half of FIG. 17 shows the processing underlying the GUI 900. An image rendering of the flattened mesh 652 may be input into a second model, i.e. the step denoted AI in FIG. 17, trained to recognize margin lines in 2D. The neural network, i.e. the second trained model, is operating on in practice an image rendering of the flattened mesh. These images are rendered using orthographic projection. In the images, each pixel can be traced to a surface point (if any surface is hit) and vice-versa via the orthographic projection. Hereby, the second model may, along with optional post-processing, output the identified margin line 654 of the flattened mesh 652. The identified margin line 654 may be used to identify vertices or preferably surface points of the flattened mesh 652 representing the margin line 630. These may in turn be traced back to the flattened mesh 652 shown in the GUI 900, and optionally highlighted in the GUI 900 for inspection by a user, and/or traced back to the 3D mesh 600 shown in the GUI 900, and optionally highlighted in the GUI 900 for inspection by a user.

The identified margin line 654 of the flattened and/or 3D mesh(es) may be included in margin line data indicative of the identified margin line 654, whereby the identified margin line 654 may be used for other purposes than merely inspection in the GUI 900. The 3D mesh 600, i.e. data comprising the 3D mesh, and the margin line data may for example be used to design a dental restoration for placement on the preparation site 632. This may involve designing the internal surface of the dental restoration, also referred to as the intaglio surface, based on the outer surface of the preparation site as represented in the 3D mesh 600 and the identified margin line 654 represented in the margin line data, and designing the outer surface of the dental restoration based on the surfaces of teeth adjacent to the preparation site 632, e.g. to get a restoration of height matching neighboring teeth, as represented in the 3D mesh 600 and the identified margin line 654 represented in the margin line data. The 3D mesh preferably also comprises color/texture data which may be used for designing the dental restoration so that a dental restoration having optical properties, e.g. color, translucency, shading, etc., matching that of teeth adjacent to the preparation site 632 may be designed. The designed dental restoration may be included in 3D dental restoration data representing the 3D surface, and preferably optical properties, of the designed restoration. The 3D dental restoration data may be used for input to a 3D printer and/or 3D milling machine, such as a local 3D printer/milling machine located in the dental clinic, or such as a remote 3D printer/milling machine located outside the dental clinic, e.g. at a dental lab.

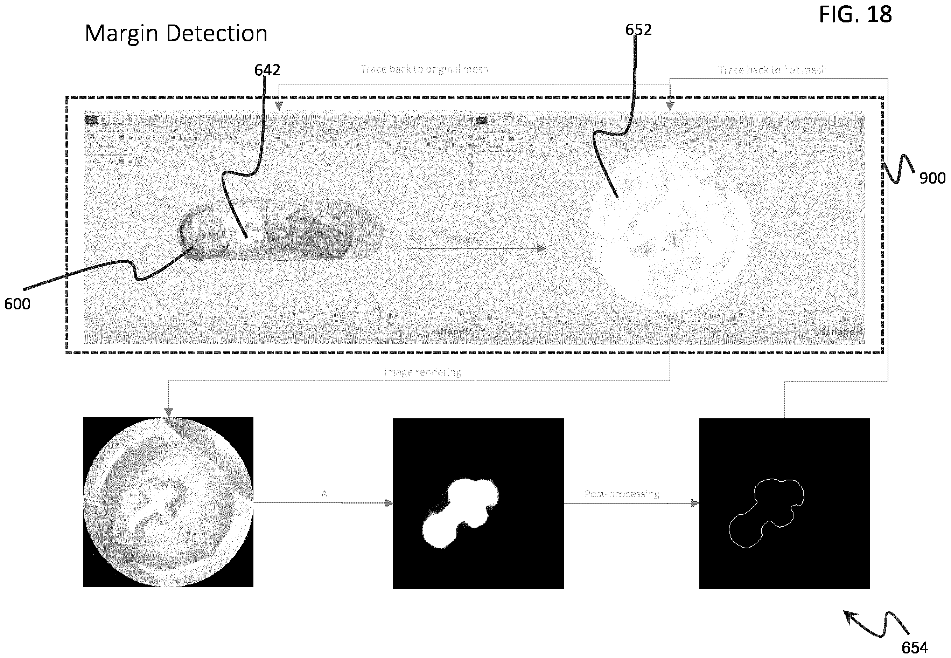

FIG. 18 illustrates the method and GUI similar to that of FIG. 17. Where the 3D mesh 600 of FIG. 17 were obtained by using an intraoral scanner 100, the 3D mesh 600 of FIG. 18 is obtained by using a lab scanner 200 on a gypsum model molded from the dental object. Regardless of how the 3D mesh 600 representing the dental object is obtained, the method of the invention may be used for flattening due to the coherent mapping of the boundary vertices to the anchor points. From the flattened mesh 652 or the image rendering thereof, it can be seen that the preparation site 642 of the dental object at hand is prepared for a partial crown on the occlusal surface of one of the patient's first molars, a so-called onlay dental restoration. The disclosed method and system are particularly useful for this type of procedure as the boundary orientation of the margin line 630 for such a procedure is often not monotonous as can also be seen in the identified margin line 654 in the lower righthand corner. Using the methods of the prior art for such a procedure could lead to issues in mapping the boundary vertices to the target boundary.

### Further details

Embodiments of the invention are disclosed in the following list of enumerated items:
1. A computer-implemented method for manipulating at least a part of a digital 3D mesh representing a dental object, the method comprising:
   - obtaining the digital 3D mesh;
   - determining a circumferential mesh boundary in the digital 3D mesh, wherein the mesh boundary comprises multiple boundary vertices and one or more inner vertices surrounded by the boundary vertices;
   - determining a target shape with a circumferential target boundary, wherein the target boundary is planar; and
   - for each vertex of the boundary vertices, performing coherent mapping to an anchor point corresponding to the respective vertex on the target boundary.
2. The method of item 1, wherein the coherent mapping fulfills a criterion of order-preservation so that the anchor points have the same order around the target boundary as their corresponding boundary vertices have around the mesh boundary and/or wherein the coherent mapping fulfills a criterion of uniqueness so that each unique boundary vertex mapped to a unique anchor point.
3. The method of any of the previous items, wherein the coherent mapping comprises:
   o selecting an initial vertex of the boundary vertices and an initial anchor point on the target boundary, and
   o mapping the initial vertex to the initial anchor point.
4. The method of item 3, wherein the coherent mapping comprises:
   o for each vertex of the boundary vertices other than the initial vertex, determining a relative distance along the mesh boundary between the respective vertex and the initial vertex, and
   o for each vertex of the boundary vertices other than the initial vertex, mapping the respective vertex to an anchor point that is the same relative distance along the target boundary from the initial anchor point as the relative distance between the respective vertex and the initial vertex.
5. The method of any of the previous items, wherein the method further comprises:
   - for each vertex of the boundary vertices, translating the respective boundary vertex to its corresponding anchor point on the target boundary.
6. The method of item 5, wherein the target shape is planar.
7. The method of items 5 and 6, wherein the method further comprises:
   - flattening the inner vertices to the target shape to generate a flattened mesh.
8. The method of any of the previous items, wherein determining a circumferential mesh boundary in the digital 3D mesh comprises:
   o coarsely identifying a margin line of the dental object in the digital 3D mesh, and
   o setting the circumferential mesh boundary around the identified margin line.
9. The method of item 8, wherein the mesh boundary is set with a buffer distance to the coarsely identified margin line.
10. The method of item 7 and items 8 or 9, wherein the method further comprises:
   - identifying the margin line in the flattened mesh.
11. The method of item 10, wherein identifying the margin line in the flattened mesh comprises:
   o determining vertices of the flattened mesh that represents the margin line.
12. The method of item 11, wherein the method further comprises:
   - identifying vertices of the digital 3D mesh corresponding to the vertices of the flattened mesh determined to represent the margin line.
13. The method of item 12, wherein the method further comprises:
   - determining the margin line in the digital 3D mesh based on the identified vertices of the digital 3D mesh corresponding to the vertices of the flattened mesh determined.
14. The method of any of the previous items, wherein the target shape is a circle.
15. The method of any of the previous items and item 8, wherein identifying a margin line of the dental object in the digital 3D mesh is performed using a machine learning model trained to recognize margin lines.
16. The method of any of the previous items, wherein the step of obtaining the digital 3D mesh comprises:
   ∘ obtaining one or more 2D image(s) of the dental object;
   ∘ generating, based on the one or more 2D image(s), point cloud data, wherein the point cloud data comprises multiple points representing surface points of the dental object; and
   ∘ generating, based on the point cloud data, the digital 3D mesh comprising multiple polygons representing the surface of the dental object.
17. The method of item 16, wherein the generating the digital 3D mesh comprises:
   ▪ obtaining geometric information based on the one or more 2D image(s), wherein the geometric information is indicative of a rate of change of one or more surface characteristic(s) in multiple surface sections of the dental object.
18. The method of item 17, wherein generating the digital 3D mesh comprises:
   ▪ determining a mesh resolution for each surface section based on the geometric information.
19. The method of item 18, wherein generating the digital 3D mesh comprises:
   ▪ generating a mesh for each surface section with resolution determined for the respective surface section.
20. The method of any of items 17-19, wherein at least part of the geometric information relating to a respective surface section is based on a distribution of the points of the point cloud data corresponding to that surface section.
21. The method of any of items 17-20, wherein at least part of the geometric information relating to a respective surface section is based on performing raytracing on light reflected at the points of the point cloud data corresponding to that surface section.
22. The method of items 20 or 21, wherein the geometric information comprises information indicative of a rate of change of a contour in the surface sections.
23. The method of any of items 17-22, wherein at least part of the geometric information relating to a respective surface section is based on color data corresponding to that surface section.
24. The method of item 23, wherein the geometric information comprises information indicative of a rate of change of color in the surface sections.
25. The method of any of items 16-24, wherein obtaining one or more 2D images of the object comprises obtaining multiple 2D images of the object.
26. The method of item 25, wherein generating point cloud data comprises solving a correspondence problem to ascertain which parts of a first image of the multiple 2D images correspond to which parts of second image of the multiple 2D images.
27. The method of items 25 or 26, wherein generating point cloud data comprises registering points of the multiple points obtained from each respective 2D image into a common coordinate system.
28. The method of any of items 16-27, wherein generating the digital 3D mesh comprises assigning a color value to each polygon based on the one or more 2D image(s).
29. The method of any of items 16-28, wherein obtaining one or more 2D image(s) comprises projecting light onto the dental object.
30. The method of item 29, wherein the light is projected in a pattern.
31. The method of item 30, wherein the projected pattern is time static.
32. The method of item 30, wherein the projected pattern is time variable.
33. The method of any of items 16-32, wherein obtaining one or more 2D image(s) of the dental object is performed with an intraoral scanner.
34. The method of any of items 16-32, wherein obtaining one or more 2D image(s) of the dental object is performed with a lab scanner.
35. The method of items 33 or 34, wherein generating point cloud data comprises performing a first transformation to generate a dataset of coordinates of at least part of the object in a scanning-device-coordinate-system.
36. The method of item 35, wherein generating point cloud data comprises performing a second transformation on the dataset of coordinates of at least part of the object in a scanning-device-coordinate-system to generate at least part of point cloud data in a real-world-coordinate-system.
37. The method of any of items 16-36, wherein generating the digital 3D mesh further comprises:
   ▪ generating an initial mesh based on the point cloud data, wherein the initial mesh comprises multiple initial polygons.
38. The method of item 37, wherein generating the digital 3D mesh is based on the initial mesh.
39. The method of items 37 or 38, wherein obtaining geometric information for a surface section comprises:
   ▪ comparing normal vectors of adjacent initial polygons within a surface section to obtain information on a rate of change in contour of the surface section.
40. The method of any of the previous items and items 11 and/or 12, wherein the method further comprises:
   - **generating** 3D dental restoration data representing a dental restoration configured for placement on the tooth having the margin line based on the digital 3D mesh and one or both of the vertices of the flattened mesh determined to represent the margin line or the vertices of the digital 3D mesh identified as corresponding to the margin line.
41. A computer program product comprising instructions which, when the program is executed by a computer, causes the computer to carry out the method of any of the previous items.
42. A non-transitory computer readable medium comprising instructions which, when executed by a computer, cause the computer to carry out the method of any of items 1-40.
43. A dental scanning system comprising:
   - a processing device configured for:
      - obtaining the digital 3D mesh;
      - determining a circumferential mesh boundary in the digital 3D mesh, wherein the mesh boundary comprises multiple boundary vertices and one or more inner vertices surrounded by the boundary vertices;
      - determining a target shape with a circumferential target boundary, wherein the target boundary is planar; and
      - for each vertex of the boundary vertices, performing coherent mapping to an anchor point corresponding to the respective vertex on the target boundary.
44. The dental scanning system of item 43, wherein the coherent mapping fulfills a criterion of order-preservation so that the anchor points have the same order around the target boundary as their corresponding boundary vertices have around the mesh boundary.
45. The dental scanning system of items 43 or 44, wherein the coherent mapping comprises:
   o selecting an initial vertex of the boundary vertices and an initial anchor point on the target boundary, and
   o mapping the initial vertex to the initial anchor point.4
46. The dental scanning system of item 45, wherein the coherent mapping comprises:
   o for each vertex of the boundary vertices other than the initial vertex, determining a relative distance along the mesh boundary between the respective vertex and the initial vertex, and
   o for each vertex of the boundary vertices other than the initial vertex, mapping the respective vertex to an anchor point that is the same relative distance along the target boundary from the initial anchor point as the relative distance between the respective vertex and the initial vertex.
47. The dental scanning system of any of items 43-46, wherein the processing device is further configured for:
   - for each vertex of the boundary vertices, translating the respective boundary vertex to its corresponding anchor point on the target boundary.
48. The dental scanning system of item 47, wherein the target shape is planar.
49. The dental scanning system of items 47 and 48, wherein the processing device is further configured for:
   - flattening the inner vertices to the target shape to generate a flattened mesh.
50. The dental scanning system of any of items 43-49, wherein determining a circumferential mesh boundary in the digital 3D mesh comprises:
   o identifying a margin line of the dental object in the digital 3D mesh, and
   o setting the circumferential mesh boundary around the identified margin line.
51. The dental scanning system of item 50, wherein the mesh boundary is set with a buffer distance to the identified margin line.
52. The dental scanning system of item 49 and items 50 or 51, wherein the processing device is further configured for:
   - re-identifying the margin line in the flattened mesh.
53. The dental scanning system of item 52, wherein re-identifying the margin line in the flattened mesh comprises:
   o determining vertices of the flattened mesh that represents the margin line.
54. The dental scanning system of item 53, wherein the processing device is further configured for:
   - identifying vertices of the digital 3D mesh corresponding to the vertices of the flattened mesh determined to represent the margin line.
55. The dental scanning system of item 54, wherein the processing device is further configured for:
   - determining the margin line in the digital 3D mesh based on the identified vertices of the digital 3D mesh corresponding to the vertices of the flattened mesh determined.
56. The dental scanning system of any of items 43-55, wherein the target shape is a circle.
57. The dental scanning system of any of items 43-56 and item 50, wherein identifying a margin line of the dental object in the digital 3D mesh is performed using a machine learning model trained to recognize margin lines.
58. The dental scanning system of any of items 43-57, wherein the system comprises:
   - an intraoral scanner configured for obtaining one or more 2D image(s) of the dental object;
   wherein processing device is further configured for:
   o generating, based on the one or more 2D image(s), point cloud data, wherein the point cloud data comprises multiple points representing surface points of the dental object; and
   o generating, based on the point cloud data, the digital 3D mesh comprising multiple polygons representing the surface of the dental object.
59. The dental scanning system of item 58, wherein generating the digital 3D mesh comprises:
   ▪ obtaining geometric information based on the one or more 2D image(s), wherein the geometric information is indicative of a rate of change of one or more surface characteristic(s) in multiple surface sections of the dental object.
60. The dental scanning system of item 59, wherein generating the digital 3D mesh comprises:
   ▪ determining a mesh resolution for each surface section based on the geometric information.
61. The dental scanning system of item 60, wherein generating the digital 3D mesh comprises:
   ▪ generating a mesh for each surface section with resolution determined for the respective surface section.
62. The dental scanning system of any of items 59-61, wherein at least part of the geometric information relating to a respective surface section is based on a distribution of the points of the point cloud data corresponding to that surface section.
63. The dental scanning system of any of items 59-62 wherein at least part of the geometric information relating to a respective surface section is based on performing raytracing on light reflected at the points of the point cloud data corresponding to that surface section.
64. The dental scanning system of items 62 or 63, wherein the geometric information comprises information indicative of a rate of change of a contour in the surface sections.
65. The dental scanning system of any of items 43-64, wherein at least part of the geometric information relating to a respective surface section is based on color data corresponding to that surface section.
66. The dental scanning system of item 65, wherein the geometric information comprises information indicative of a rate of change of color in the surface sections.
67. The dental scanning system of any of items 58-66, wherein obtaining one or more 2D images of the dental object comprises obtaining multiple 2D images of the object.
68. The dental scanning system of item 67, wherein generating point cloud data comprises solving a correspondence problem to ascertain which parts of a first image of the multiple 2D images correspond to which parts of second image of the multiple 2D images.
69. The dental scanning system of items 67 or68, wherein generating point cloud data comprises registering points of the multiple points obtained from each respective 2D image into a common coordinate system.
70. The dental scanning system of any of items 43-69, wherein generating the digital 3D mesh comprises assigning a color value to each polygon based on the one or more 2D image(s).
71. The dental scanning system of any of items 43-70, wherein obtaining one or more 2D image(s) comprises projecting light onto the dental object.
72. The dental scanning system of item 71, wherein the light is projected in a pattern.
73. The dental scanning system of item 72, wherein the projected pattern is time static.
74. The dental scanning system of item 72, wherein the projected pattern is time variable.
75. The dental scanning system of any of items 43-74, wherein generating point cloud data comprises performing a first transformation to generate a dataset of coordinates of at least part of the object in a scanning-device-coordinate-system.
76. The dental scanning system of item 75, wherein generating point cloud data comprises performing a second transformation on the dataset of coordinates of at least part of the object in a scanning-device-coordinate-system to generate at least part of point cloud data in a real-world-coordinate-system.
77. The dental scanning system of any of items 43-76, wherein generating the digital 3D mesh further comprises:
   ▪ generating an initial mesh based on the point cloud data, wherein the initial mesh comprises multiple initial polygons.
78. The dental scanning system of item 77, wherein generating the digital 3D mesh is based on the initial mesh.
79. The dental scanning system of items 77 or 78, wherein obtaining geometric information for a surface section comprises:
   ▪ comparing normal vectors of adjacent initial polygons within a surface section to obtain information on a rate of change in contour of the surface section.
80. The dental scanning system of any of items 43-76, wherein processing device is further configured for:
   - generating 3D dental restoration data representing a dental restoration configured for placement on the tooth having the margin line based on the digital 3D mesh and one or both of the vertices of the flattened mesh determined to represent the margin line or the vertices of the digital 3D mesh identified as corresponding to the margin line.
81. The dental scanning system of item 80, wherein the system further comprises:
   - a 3D printer or a 3D milling machine configured for manufacturing a dental restoration configured for placement on the tooth having the margin line based on the 3D dental restoration data.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering. Furthermore, the labelling of a first element does not imply the presence of a second element and vice versa.

It is to be noted that the word "comprising" does not necessarily exclude the presence of other elements or steps than those listed. It is to be noted that the words "a" or "an" preceding an element do not exclude the presence of a plurality of such elements.

It should further be noted that any reference signs do not limit the scope of the claims, that the exemplary embodiments may be implemented at least in part by means of both hardware and software, and that several "means", "units" or "devices" may be represented by the same item of hardware.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art, and the generic principles defined herein may be applied to other aspects.

Although embodiments and features have been shown and described, it will be understood that they are not intended to limit the claimed invention, and it will be made obvious to those skilled in the art that various changes and modifications may be made without departing from the spirit and scope of the claimed invention. The specification and drawings are, accordingly to be regarded in an illustrative rather than restrictive sense. The claimed invention is intended to cover all alternatives, modifications, and equivalents.

### List of references

| | | | |
|---|---|---|---|
| 100 | intraoral scanner | 610 | first region |
| 102 | distal end | 612 | surface section |
| 104 | proximal end | 614 | surface section |
| 106 | scanner body | 620 | second region |
| 108 | scanner interface | 630 | margin line |
| 110 | sleeve | 632 | preparation site |
| 120 | battery | 640 | circumferential mesh boundary |
| 130 | projector unit | 642 | subsection of the 3D mesh |
| 140 | camera unit | 644 | area of interest |
| 150 | processor(s) | 646 | inner vertex |
| 160 | computer readable medium | 650 | target boundary |
| 170 | scanner window | 652 | flattened mesh |
| 180 | mirror | 654 | identified margin line |
| 200 | lab scanner | 660 | radial angle |
| 202 | dental object | 700 | dental scanning system |
| 300 | scanning station | 800 | obtaining a digital 3D mesh |
| 302 | 3D printer/milling machine | 810 | determining a circumferential mesh boundary |
| 306 | input device | 820 | determining 820 a target shape |
| 350 | processor(s) | 830 | performing coherent mapping |
| 360 | computer readable medium | 840 | translating each boundary vertices |
| 400 | server | 850 | flattening the inner vertices |
| 450 | processor(s) | 860 | identifying a margin line |
| 460 | computer readable medium | 862 | identifying vertices of the flattened mesh representing the margin line |
| 500 | point cloud data | 864 | identifying vertices of the 3D mesh representing the margin line |
| 502 | point | 866 | generating margin line data |
| 600 | digital 3D mesh | 870 | generating 3D dental restoration data |
| 602 | vertex | 872 | manufacturing a dental restoration |
| 604 | edge | 890 | outputting the flattened mesh |
| 606 | face | x_j | boundary vertex |
| 608 | facet/polygon | x_j | anchor point |
| | | 900 | GUI |

## Claims

1. **A computer-implemented** method for flattening a digital 3D mesh representing a dental object, the method comprising:
• obtaining the digital 3D mesh;
• determining a circumferential mesh boundary in the digital 3D mesh, wherein the mesh boundary comprises multiple boundary vertices surrounding multiple inner vertices;
• determining a target shape with a circumferential target boundary, wherein the target shape is planar;
• for each vertex of the boundary vertices, performing coherent mapping to an anchor point on the target boundary corresponding to the respective vertex;
• for each vertex of the boundary vertices, translating the respective boundary vertex to its corresponding anchor point on the target boundary; and
• flattening the inner vertices to the target shape to generate a flattened mesh based on the anchor points.

2. The method of claim 1, wherein the coherent mapping fulfills a criterion of order-preservation so that the anchor points have the same order around the target boundary as their corresponding boundary vertices have around the mesh boundary.

3. The method of claims 1 or 2, wherein the coherent mapping fulfills a criterion of uniqueness so that each unique boundary vertex mapped to a unique anchor point.

4. The method of any of any of the previous claims, wherein the coherent mapping comprises:
o selecting an initial vertex of the boundary vertices and an initial anchor point on the target boundary, and
o mapping the initial vertex to the initial anchor point.

5. The method of claim 4, wherein the coherent mapping comprises:
o for each vertex of the boundary vertices other than the initial vertex, determining a relative distance along the mesh boundary between the respective vertex and the initial vertex, and
o for each vertex of the boundary vertices other than the initial vertex, mapping the respective vertex to an anchor point that is the same relative distance along the target boundary from the initial anchor point as the relative distance between the respective vertex and the initial vertex.

6. **The method** of any of the previous claims, wherein determining a circumferential mesh boundary in the digital 3D mesh comprises:
o coarsely identifying a margin line of the dental object in the digital 3D mesh, and
o setting the circumferential mesh boundary around the coarsely identified margin line.

7. The method of claim 6, wherein the mesh boundary is set with a buffer distance to the coarsely identified margin line.

8. The method of any of the previous claims, wherein the method further comprises:
• identifying a/the margin line of the dental object in the flattened mesh.

9. The method of claim 8, wherein the method further comprises:
• identifying vertices or surface points of the flattened mesh that represents the margin line based on the identified margin line in the flattened mesh.

10. The method of claims 8 or 9, wherein the method further comprises:
• identifying the margin line in the 3D mesh based on the margin line identified in the flattened mesh.

11. The method of claim 10, wherein the method further comprises:
• identifying vertices or surface points of the digital 3D mesh representing the margin line based on the margin line identified in the 3D mesh.

12. The method of any of the previous claims and claims 9 and/or 11, wherein the method further comprises:
• generating 3D dental restoration data representing a dental restoration configured for placement on the margin line based on the digital 3D mesh and one or both of the vertices or surface points of the flattened mesh identified as representing the margin line or the vertices or surface points of the digital 3D mesh identified as representing the margin line.

13. A dental system comprising:
- a processing device configured for executing the method of any of claims 1-12.

14. The dental system of claim 13 further comprising:
- an intraoral scanner configured for obtaining one or more 2D image(s) of the dental object;
wherein the processing device is further configured for generating, based on the one or more 2D image(s), the digital 3D mesh comprising multiple polygons representing the surface of the dental object.

15. The dental system of claims 13 or 14 further comprising:
- a 3D printer or a 3D milling machine configured for manufacturing a dental restoration configured for placement on the tooth having the margin line based on the 3D dental restoration data.
